(19) Europäisches Patentamt
European Patent Office
Office européen des brevets

(11) EP 1 983 738 A1

(12) EUROPEAN PATENT APPLICATION
published in accordance with Art. 158(3) EPC

(43) Date of publication:
22.10.2008 Bulletin 2008/43

(51) Int Cl.:
H04N 1/46 (2006.01)     B41C 1/00 (2006.01)
B41F 31/02 (2006.01)    G01J 3/46 (2006.01)
H04N 1/60 (2006.01)

(21) Application number: 07713753.7

(22) Date of filing: 31.01.2007

(86) International application number:
PCT/JP2007/051593

(87) International publication number:
WO 2007/088888 (09.08.2007 Gazette 2007/32)

(84) Designated Contracting States:
DE NL

(30) Priority: 31.01.2006 JP 2006023324

(71) Applicant: Mitsubishi Heavy Industries, Ltd.
Minato-ku
Tokyo 108-8215 (JP)

(72) Inventors:
• OZAKI, Ikuo
Hiroshima-shi, Hiroshima 733-8553 (JP)
• TAKEMOTO, Shuichi
Mihara-shi, Hiroshima 729-0393 (JP)
• TASAKA, Norifumi
Mihara-shi, Hiroshima 729-0393 (JP)

(74) Representative: HOFFMANN EITLE
Patent- und Rechtsanwälte
Arabellastrasse 4
81925 München (DE)

(54) METHOD AND DEVICE FOR CHECKING PICTURE TONE TO BE PRINTED BY PRINTER BEFORE PRINTING, PLATE-MAKING METHOD, AND METHOD AND DEVICE FOR CONTROLLING PRINTER PICTURE TONE

(57) The invention relates to picture color tone control for a printing press, and it is an object of the invention to make it possible to confirm a color shade before printing is performed thereby to prevent failure in printing and suppress incidence of paper loss. A device profile of a printing press to be used for printing is acquired, and a device profile of a simulation printing tool is acquired and plate making data is acquired. Then, the device profile of the printing press is used to convert tone value data k, c, m, y of the plate making data into color coordinates (L*a*b*), and color coordinates (L*a*b*) obtained by conversion using the device profile of the simulation printing too are outputted with densities according to densities R, G, B from the simulation printing tool. Then, it is decided whether or not the color shade of the output is within a permissible range. Plate making and picture color tone control of the printing press are performed based on a result of the decision.

FIG. 1

EP 1 983 738 A1

**Description**

Technical Field

The present invention relates to a method and an apparatus suitable for controlling the picture color tone of a printing press, and particularly to a pre-printing confirmation method of the picture color tone for a printing press, a plate making method which uses the pre-printing confirmation method, and a picture color tone controlling method for a printing press as well as a pre-printing confirmation apparatus of the picture color tone for a printing press and a picture color tone controlling apparatus for a printing press.

Background Art

Various techniques have been proposed in order to control the color tone of a picture of a printing press. For example, in techniques disclosed in Patent Document 1 and Patent Document 2, the spectral reflectance of a picture printed by printing units of different colors is measured by a spectrometer and then the spectral reflectance (average spectral reflectance of an entire key zone) is calculated for each of key zones of ink keys and then the spectral reflectance of each key zone is converted into a color coordinate value (L*a*b*). Then, the ink supplying amount of each color is adjusted to perform test printing, and if a printing sheet (hereinafter referred to as OK sheet) having a desired color tone is obtained, then the color coordinate value of each key zone of the OK sheet is set to a target color coordinate value. Then, actual printing is started and the difference (color difference) between the color coordinate values of the OK sheet and a printing sheet (printing sheet obtained by pressrun is hereinafter referred to as pressrun sheet) is calculated, and the opening of the ink key of each printing unit is adjusted by online control so that the color difference may be reduced to zero.

However, a spectrometer used as a measurement means in the techniques described above requires a high cost. Further, it is difficult for the spectrometer, from its performance, to measure a target (printing sheet) which moves at a very high speed as in the case of a rotary press for newspapers. Further, in the techniques described above, since the color tone control is started after an OK sheet is printed, a great amount of paper loss appears after the printing process is started until the OK sheet is printed.

Thus, Patent Document 3 discloses a technique wherein, in order to solve such subjects as described above, color tone control is performed in accordance with the following procedure.

First, a target color mixture halftone density for each ink supplying unit width when a printing picture is divided by the ink supplying unit width of an ink supplying apparatus is set. It is to be noted that, where the ink supplying apparatus is an ink key apparatus, the ink supplying unit width of the ink supplying apparatus is the key width (key zone) of each ink key, but where the ink supplying apparatus is a digital pump apparatus, the ink supplying unit width is the pump width of each digital pump. It is to be noted that a setting method for the target color mixture halftone density is hereinafter described.

If printing is started and a pressrun sheet is obtained, then an actual color mixture halftone density for each ink supplying unit width of the pressrun sheet is measured using an IRGB densitometer. Then, actual tone values for each ink color corresponding to the actual color mixture halftone density are calculated based on a corresponding relationship set in advance between tone values and color mixture halftone densities for the individual ink colors. As a method for determining actual tone values from an actual color mixture halftone density, a database wherein a relationship between tone values and color mixture halftone densities for individual ink colors is stored, for example, a database wherein data obtained by printing a color scale of the standards of the Japan Color (ISO12642) for Newspaper Printing established by the ISO/TC130 National Commission and actually measuring the color scale by means of an IRGB densitometer are stored, may be used. More simply, the database can be utilized also to utilize an approximate value calculated using the known Neugebauer expression. Further, target tone values for each ink color corresponding to the target color mixture halftone density are calculated based on the corresponding relationship described above between tone values and color mixture halftone densities. Different from the actual tone values, the target tone values need not be calculated every time, but it is sufficient to calculate the target tone values once unless the target color mixture halftone density varies. For example, the target tone values may be calculated at a point of time when the target color mixture halftone density is set.

Then, an actual monochromatic halftone density corresponding to the actual tone values is calculated based on a corresponding relationship set in advance between tone values and monochromatic halftone densities. As a method of determining an actual monochromatic halftone density from actual tone values, a map or a table which represents a relationship between monochromatic halftone densities and tone values may be prepared such that the actual tone values are applied to the map or the table. More simply, the relationship described above may be approximated using the known Yule-Nielsen expression to calculate the actual monochromatic halftone density. Meanwhile, a target monochromatic halftone density corresponding to the target tone values is calculated based on the corresponding relationship described above between tone values and monochromatic halftone densities. Different from the actual monochromatic halftone density, the target monochromatic halftone density need not be calculated every time, and it is sufficient to calculate the target monochromatic halftone density once unless the target tone values vary. For example, the target monochromatic halftone density may be calculated at a point of time when the target tone values are set.

Then, a solid density difference corresponding to a difference between the target monochromatic halftone density and the actual monochromatic halftone density under the target tone values is calculated based on a corresponding relationship set in advance among tone values, monochromatic halftone densities and solid densities. As a method of determining the solid density difference, a map or a table which represents the corresponding relationship described above is prepared, and then the target tone values, target monochromatic halftone density and actual monochromatic halftone density are applied to the map or table. More simply, the relationship described above may be approximated using the known Yule-Nielsen expression to calculate the solid density difference. Then, the ink supplying amount is adjusted for each of the ink supplying unit widths based on the calculated solid density difference and the ink supplying amount for each color is controlled for each of the ink supplying unit widths. The adjustment amount of the ink supplying amount based on the solid density difference can be calculated simply using the known API (Auto Preset Inking) function.

According to such a picture color tone controlling method as described above, since color tone control can be performed using not a spectrometer but an IRGB densitometer, the cost required for the measuring system can be reduced, and besides the picture color tone controlling method can be applied sufficiently also to a high speed printing press such as a rotary press for newspapers.

Meanwhile, as a technique for setting a target color mixture halftone density where kcmy tone value data of a printing object picture (for example, image data for plate making or the like) can be acquired from the outside (for example, a printing requesting source or the like), the following technique has been proposed.

First, the acquired image data (kcmy tone value data) are used to set a noticed pixel (a noticed pixel may be a single pixel or a plurality of contiguous pixels in a mass) corresponding to each of ink colors for each ink supplying unit width from among pixels which form the printing object picture. Then, the tone values of the noticed pixel are converted into a color mixture halftone density based on a corresponding relationship set in advance between tone values and color mixture halftone densities. Then, the color mixture halftone density of the noticed pixel is set as a target color mixture halftone density, and the actual color mixture halftone density of the set noticed pixel is measured.

According to the proposed technique, since color development can be estimated in a unit of a pixel by utilizing the database of Japan Color (ISO12642) or the like, color tone control can be performed for a particular noticed point (noticed pixel) of the picture at a point of time immediately after printing is started without waiting for an OK sheet to be printed. It is to be noted that the kcmy tone value data may be bitmap data of the printing object picture (for example, data for 1 bit-Tiff plating making). Or, low resolution data corresponding to CIP3 data obtained by conversion of such bitmap data may be used alternatively.

It is to be noted that, as a setting method of a noticed point (noticed picture), a method is available wherein an image of a printing picture is displayed on a display apparatus such as a touch panel using bitmap data such that an operator may designate a noticed point arbitrarily. Also a method has been proposed wherein a pixel having a maximum density sensitivity, or a pixel having a maximum autocorrelation to the tone values, is automatically extracted for each ink color through calculation and is set as a noticed pixel. In a particular setting method of a noticed pixel, an autocorrelation sensitivity H is introduced such that a pixel having a maximum autocorrelation sensitivity H is calculated as a pixel having a maximum autocorrelation and is set as a noticed pixel. For example, the autocorrelation sensitivity Hc to cyan can be represented, using pixel area ratio data (c, m, y, k), as "$Hc = c^n/(c + m + y + k)$" and a pixel having a maximum value of the autocorrelation sensitivity Hc is set as a noticed point of cyan (n: for example, an exponentiation of the autocorrelation of approximately 1.3 is selected).

If a pixel having a maximum autocorrelation with regard to tone values is extracted through calculation and set as a noticed pixel for each ink color and a target monochromatic halftone density and an actual monochromatic halftone density are calculated with regard to the noticed pixel and then the ink supplying amount is feedback controlled so that the actual monochromatic halftone density may approach the target monochromatic halftone density in such amanner as described above, then stabilized color tone control can be achieved.

Patent Document 1: Japanese Patent Laid-Open No. 2001-18364
Patent Document 2: Japanese Patent Laid-Open No. 2001-47605
Patent Document 3: Japanese Patent Laid-Open No. 2004-106523

Disclosure of the Invention

Subject to Be Solved by the Invention

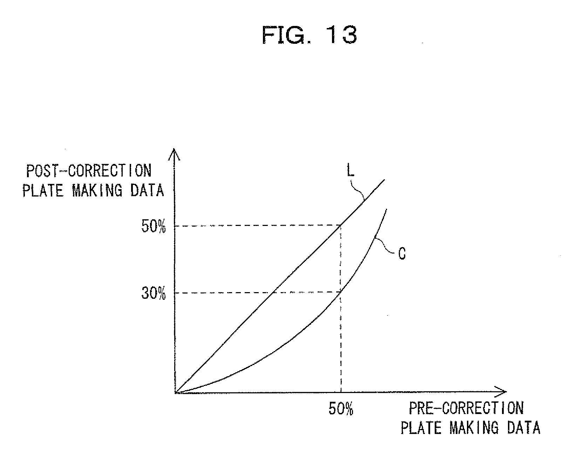

Incidentally, when printing is performed, plate making must be performed in advance. In particular, plate making data is acquired and plate making is performed, for example, by CTP (Computer to Plate) based on tone value data (c, m, y, k) of the plate making data and then a made printing plate is mounted on a printing press such as a rotary press to perform printing. Then, the color tone control described above is performed by actual printing.
Accordingly, whether or not the color tone is suitable can be confirmed unless the color shade of an actually printed matter is observed. Therefore, while good paper decision is performed after printing is started to confirm the color shade of a printing result, paper loss inevitably appears before it is decided that good paper is obtained, and this is a subject from a view point of the cost. Further, if the printing contents require a delicate color tone, then since there is the possibility that the required color tone may not be obtained readily and much time is required before it is decided that good paper is obtained, paper loss increases. Further, where the print requires a particularly severe color tone or in a like case, a complaint from a customer is sometimes sent for a print decided as good paper. In this instance, printing results in failure and all of printing objects are considered as paper loss, and printing by a required amount must be performed again under the condition that some change is performed so that a suitable color tone is obtained.
A cause is considered by which the color tone of a printed matter does not become suitable as described above. Where plate making is performed by CTP, after a CTP output (tone value upon actual plate making) corresponding to a tone value of plate making data is obtained, plate making is performed. However, at this time, most generally the tone value of the plate making data is used as it is as the tone value of the CTP output to perform plate making. However, even if the tone value of the plate making data is applied as it is to plate making and printing is performed using a printing plate obtained by the plate making, depending upon the printing press, there is the possibility that the color development density may become excessively high or excessively low in spite of a standard ink supplying state.
The phenomenon just described is caused by a printing characteristic unique to each printing press. For example, also the dot gain characteristic is different depending upon the printing press, and where the printing press has a comparatively high dot gain, an inclination that the color development density becomes high appears, but where the printing press has a comparatively low dot gain, another inclination that the color development density becomes low appears. Accordingly, a phenomenon appears that, although the color tone is set so as to be appropriate, the color shade of an actually printed matter is not suitable.
Naturally, if a characteristic of a printing press to be used is recognized and a process which reflects the characteristic is performed in advance, then a suitable color tone can be obtained from the beginning of printing. For example, if a plate making curve C (relationship of the tone value of the CTP output to the tone value of plate making data) as illustrated in FIG. 13 which indicates a printing characteristic unique to each printing press is calculated in advance and then plate making by CTP is performed based on the plate making curve, then a more suitable color tone can be obtained from the beginning of printing.
However, it is a premise that the plate making curve C is obtained already, and in plate making by CTP which is performed commonly, a tone value of plate making data is used as it is as a tone value of the CTP output to perform plate making as described above. In other words, the plate making method just described is performed by using such a linear characteristic curve L as illustrated in FIG. 13. Almost all plate making curves of rotary presses actually used for printing are curved slightly as seen from the plate making curve C illustrated in PIG. 13.
The present invention has been made in view of such subjects as described above, and it is an object of the present invention to provide a pre-printing confirmation method and apparatus of a picture color tone for a printing press, a plate making method and a picture color tone controlling method and apparatus for a printing press wherein a color shade can be confirmed before printing is performed such that failure in printing is prevented to suppress appearance of paper loss.

Means for Solving the Subjects

In order to attain the object described above, according to the present invention as set forth in claim 1, there is provided a pre-printing confirmation method of a picture color tone for a printing press, comprising a device profile acquisition step of a printing press of producing or acquiring a relationship between tone value data k, c, m and y and color coordinates (L*a*b*) under a reference ink density as a device profile of a printing press to be used for printing, a device profile acquisition step of a simulation printing of producing or acquiring, as a device profile of a simulation printing tool (for example, a personal computer and a monitor or a printer connected to the personal computer), a relationship between simulation printing tool color mixture halftone densities R, G and B (for example, the monitor) or simulation printing tool tone values k', c', m' and y' (for example, the printer) and color coordinates (L*a*b*), a plate making data acquisition step of acquiring plate making data to be used for printing, a first conversion step of converting tone value data k, c, m and y of the acquired plate making data into color coordinates (L*a*b*) using the device profile of the printing press, a second conversion step of converting the color coordinates (L*a*b*) into simulation printing tool color mixture halftone densities R, G and B or simulation printing tool tone values k', c', m' and y' using the device profile of the simulation printing that the color coordinates (L*a*b*) are obtained by the first conversion step, an output step of outputting a picture according to the plate making data to the simulation printing tool in accordance with the simulation printing tool color mixture halftone densities R, G and B (monitor) or the converted simulation printing tool tone values k',c',m' and y' (printer) obtained by the conversion, and a decision step of deciding whether or not a color shade of an output of the simulation printing tool is within a permissible range.

Preferably, at the decision step, the decision of the color shade is performed for each ink supplying region of the printing press.

Preferably, the device profile of the printing press is produced based on a corresponding relationship obtained by printing a color scale of the Japan Color (ISO12642) or the like in advance with the reference density by the printing press.

Preferably, if it is decided by the confirmation of the color shade at the decision step that the color shade is within a first permissible range, then plate making is performed using a reference plate making curve, but, if it is decided by the confirmation of the color shade at the decision step that the color shade is not within the first permissible range, then the plate making curve is corrected using the device profile of the printing press so that the plate making curve becomes the plate making curve of the printing press and then the plate making data is corrected using the corrected plate making curve of the printing press, whereafter the first conversion step, second conversion step and decision step are performed again.

Preferably, the printing press performs setting a target color mixture halftone density which is a target value for a color mixture halftone density of a printed picture, and, based on a detection value of a density detection sensor which detects a density, picture color tone control such that an actual color development density of a printed picture approaches the target color mixture halftone density, and acquires a relationship between color mixture halftone densities I, R, G and B and color coordinates (L*a*b*) as a device profile of the density detection sensor in advance; if it is decided based on the confirmation of the color shade at the decision step that the color shade is within a second permissible range set as a range severer than the first permissible range within the first permissible range, then reference target densities $I_0$, $R_0$, $G_0$ and $B_0$ corresponding to the plate making data are used as they are as the target color mixture halftone density, but if it is decided that the color shade is not within the second permissible range, the target color mixture halftone density is corrected so that the color shade falls within the second permissible range with respect to the reference target density; and the target color mixture halftone densities $I_0'$, $R_0'$, $G_0'$ and $B_0'$ obtained by the correction are converted into color coordinates (L*a*b*) using the device profile of the density detection sensor and then the second conversion step and the decision step are performed again.

Preferably, the printing press performs setting a target color mixture halftone density which is a target value for a color mixture halftone density of a printed picture, and, based on a detection value of a density detection sensor which detects a density, picture color tone control such that an actual color development density of a printed picture approaches the target color mixture halftone density, and acquires a relationship between color mixture halftone densities I, R, G and B and color coordinates (L*a*b*) as a device profile of the density detection sensor in advance; if it is decided based on the confirmation of the color shade at the decision step that the color shade is within a permissible range, then reference target densities $I_0$, $R_0$, $G_0$ and $B_0$ corresponding to the plate making data are used as they are as the target color mixture halftone density, but if it is decided that the color shade is not within the permissible range, then the target color mixture halftone density is corrected so that the color shade falls within the permissible range with respect to the reference target density; and the target color mixture halftone densities $I_0'$, $R_0'$, $G_0'$ and $B_0'$ obtained by the correction are converted into color coordinates (L*a*b*) using the device profile of the density detection sensor and then the second conversion step and the decision step are performed again.

Preferably, the correction process of the target color mixture halftone density includes a changing ratio setting step of setting a changing ratio regarding the target tone value of each ink color or the target color mixture halftone density corresponding to the target tone value, and a target value changing step of multiplying the reference target density or the target tone value corresponding to the reference target density by each changing ratio calculated at the changing ratio setting step to change the reference target density or the target tone value.

Preferably, the device profile acquisition step of the printing press, device profile acquisition step of the simulation printing tool, plate making data acquisition step, first conversion step, second conversion step and output step are executed by a controlling apparatus of the simulation printing tool.

It is to be noted that the device profile (k, c, m, y ⇔ L, a, b), sensor device profile (R, G, B, I ⇔ L, a, b) and so forth of the printing press can be produced by a measurement result obtained by printing a color scale (color chart) of the Japan Color (ISO12642) or the like in advance in accordance with the reference density by the printing press and measuring the printed color scale by means of a sensor capable of detecting a color development density such as an IRGB densitometer and a spectral colorimeter on the market. Further, the sensor device profile, device profile of the printing press and so forth are used as the ICC profile if they are produced in accordance with the ICC format.

According to the present invention as set forth in claim 9, there is provided a plate making method, wherein, if it is decided based on the confirmation of the color shade using the pre-printing confirmation method of a picture color tone as set forth in claim 4 that the color shade is within the first permissible range, then plate making is performed using the reference plate making curve, but if it is decided that the color shade is not within the first permissible range, then the plate making curve is corrected so that the plate making curve becomes the plate making curve of the printing press using the device profile of the printing press and then plate making is performed using the corrected plate making curve of the printing press.

According to the present invention as set forth in claim 10, there is provided a picture color tone controlling method for a printing press to be performed, after the confirmation of a color shade using the pre-printing confirmation method of a picture color tone as set forth in any one of claims 1 to 8, based on the suitably corrected target color mixture halftone density, comprising a noticed pixel region acquisition step of acquiring a noticed pixel region to be noticed as a target of color tone control from within the printing picture, a target color mixture halftone density acquisition step of acquiring the target color mixture halftone density regarding the noticed pixel region selected at the noticed pixel region acquisition step, an actual color mixture halftone density measurement step of measuring an actual color mixture halftone density of each noticed pixel region of a pressrun sheet obtained by printing using an IRGB densitometer, a target tone value calculation step of calculating a target tone value of each ink color corresponding to the target color mixture halftone density based on a corresponding relationship between tone values and color mixture halftone densities set in advance, an actual tone value calculation step of calculating an actual tone value of each ink color corresponding to the actual color mixture halftone density based on the corresponding relationship between tone values and color mixture halftone densities, a target monochromatic halftone density calculation step of calculating a target monochromatic halftone density corresponding to the target tone value based on a corresponding relationship between tone values and monochromatic halftone densities set in advance, an actual monochromatic halftone density calculation step of calculating an actual monochromatic halftone density corresponding to the actual tone value based on the corresponding relationship between tone values and monochromatic halftone densities, a solid density difference calculation step of calculating a solid density difference corresponding to a difference between the target monochromatic halftone density and the actual monochromatic halftone density under the target tone value based on a corresponding relationship among tone values, monochromatic halftone densities and solid densities set in advance, and an ink supplying amount adjustment step of adjusting an ink supplying amount for each ink supplying width of an ink supplying amount based on the solid density difference.

Preferably, as the corresponding relationship between the tone values and the color mixture halftone densities to be used at the target tone value calculation step and the actual tone value calculation step, solid density values $D_i(\lambda)$ for each of the wavelengths $\lambda$ of colors of I (infrared light), R (Red), G (Green), and B (Blue) are acquired in advance and a publicly known extended Neugebauer expression (A) is produced in advance wherein a Yule-Nielsen coefficient n is set to such a value that the tone values and the color mixture halftone density value have a substantially linear relationship to each other, and the target tone values and the actual tone values are determined using the publicly known extended Neugebauer expression (A).

[Expression 1]

$$10^{-Da(\lambda)/n} = (1-k)(1-c)(1-m)(1-y)$$
$$+ k(1-c)(1-m)(1-y)10^{-Dk(\lambda)/n}$$
$$+ c(1-k)(1-m)(1-y)10^{-Dc(\lambda)/n}$$
$$+ m(1-k)(1-c)(1-y)10^{-Dm(\lambda)/n}$$
$$+ y(1-k)(1-c)(1-m)10^{-Dy(\lambda)/n}$$
$$+ kc(1-m)(1-y)10^{-Dkc(\lambda)/n}$$
$$+ km(1-c)(1-y)10^{-Dkm(\lambda)/n} + ky(1-k)(1-y)10^{-Dky(\lambda)/n}$$
$$+ cm(1-k)(1-y)10^{-Dcm(\lambda)/n} + cy(1-k)(1-m)10^{-Dcy(\lambda)/n}$$
$$+ my(1-k)(1-c)10^{-Dmy(\lambda)/n} + kcm(1-y)10^{-Dkcm(\lambda)/n}$$
$$+ kcy(1-m)10^{-Dkcy(\lambda)/n} + kmy(1-c)10^{-Dkmy(\lambda)/n}$$
$$+ cmy(1-k)10^{-Dcmy(\lambda)/n} + kcmy10^{-Dkcmy(\lambda)/n}$$

$$\cdots \quad (A)$$

where

Da($\lambda$): color mixture halftone density value,

k, c, m, y: tone values of corresponding inks,

Di($\lambda$): solid density value of wavelength $\lambda$ of each color i (extracted from color scale data),

i: one of Cyan, Magenta, Yellow, Black and color mixture of them,

for example, Dc: solid density value of Cyan, Dm: solid density value of Magenta, Dy: solid density value of Yellow,

Dk: solid density value of Black,

Dcm: two-color overlapping solid density value of Cyan and Magenta, Dcy: two-color overlapping solid density value of Cyan and Yellow, Dmy: two-color overlapping solid density value of Magenta and Yellow,

Dkc: two-color overlapping solid density value of Cyan and Black, Dkm: two-color overlapping solid density value of Magenta and Black, Dky: two-color overlapping solid density value of Yellow and Black,

Dcmy: three-color overlapping solid density value of Cyan, Magenta and Yellow,

Dkcm: three-color overlapping solid density value of Cyan, Magenta and Black,

Dkcy: three-color overlapping solid density value of Cyan, Yellow and Black,

Dkmy: three-color overlapping solid density value of Magenta, Yellow and Black,

Dcmyk: four-color overlapping solid density value of Cyan, Magenta, Yellow and Black

$\lambda$: wavelength region of each of R, G, B, I, for example, R = 650 nm, G = 550 nm, B = 450 nm, I = 800 nm, and

n: coefficient of Yule-Nielsen.

Preferably, the solid density value Di ($\lambda$) for each of the wavelengths $\lambda$ of the colors of I (infrared light), R (Red), G (Green) and B (Blue) in the publicly known extended Neugebauer expression (A) is acquired from data obtained in advance by printing a color scale of the Japan Color (ISO12642) or the like under the standard density.

Preferably, the target color mixture halftone density setting step includes a data acquisition step of acquiring tone values data of kcmy of a printing object picture from the outside, and a color mixture halftone density conversion step of converting the tone values of the noticed pixel regions acquired at the data acquisition step into color mixture halftone densities based on the corresponding relationship between the tone values and the color mixture halftone densities set in advance, the color mixture halftone densities of the noticed pixel regions converted at the color mixture halftone density conversion step being set as the target color mixture halftone densities.

Preferably, the corresponding relationship between the tone values and the color mixture halftone densities used at the color mixture halftone density conversion step is defined as a conversion table produced based on a corresponding relationship obtained in advance by printing a color scale of the Japan Color (ISO12642) or the like under the standard density or the publicly known Neugebauer expression (B) wherein solid density values ni($\lambda$) of each of the wavelengths $\lambda$ of the colors of I (infrared plight), R (Red), G (Green), and B (Blue) are obtained in advance by printing a color scale of the Japan Color (ISO12642) or the like under the standard density and then dot gain corrected, and a color mixture halftone density is determined using the conversion table or the publicly known Neugebauer expression (B) in the dot gain corrected state:

[Expression 2]

$$10^{-Dao(\lambda)} = (1 - k)(1 - c)(1 - m)(1 - y)$$
$$+ k(1 - c)(1 - m)(1 - y)10^{-Dk(\lambda)}$$
$$+ c(1 - k)(1 - m)(1 - y)10^{-Dc(\lambda)}$$
$$+ m(1 - k)(1 - c)(1 - y)10^{-Dm(\lambda)}$$
$$+ y(1 - k)(1 - c)(1 - m)10^{-Dy(\lambda)} + kc(1 - m)(1 - y)10^{-Dkc(\lambda)}$$
$$+ km(1 - c)(1 - y)10^{-Dkm(\lambda)} + ky(1 - k)(1 - y)10^{-Dky(\lambda)}$$
$$+ cm(1 - k)(1 - y)10^{-Dcm(\lambda)} + cy(1 - k)(1 - m)10^{-Dcy(\lambda)}$$
$$+ my(1 - k)(1 - c)10^{-Dmy(\lambda)} + kcm(1 - y)10^{-Dkcm(\lambda)}$$
$$+ kcy(1 - m)10^{-Dkcy(\lambda)} + kmy(1 - c)10^{-Dkmy(\lambda)}$$
$$+ cmy(1 - k)10^{-Dcmy(\lambda)} + kcmy10^{-Dkcmy(\lambda)}$$

$$\cdots \quad (B)$$

where

Dao($\lambda$): target color mixture halftone density value,
k, c, m, y: tone values data in a dot gain corrected state,
Di($\lambda$): solid density value of each of the wavelength $\lambda$ of each color i (extracted from color scale data),
i: one of Cyan, Magenta, Yellow, Black and color mixture of them,
for example, Dc: solid density value of Cyan, Dm: solid density value of Magenta, Dy: solid density value of Yellow, Dk: solid density value of Black,
Dcm: two-color overlapping solid density value of
Cyan and Magenta, Dcy: two-color overlapping solid density value of Cyan and Yellow, Dmy: two-color overlapping solid density value of Magenta and Yellow,
Dkc: two-color overlapping solid density value of Cyan and Black, Dkm: two-color overlapping solid density value of Magenta and Black, Dky: two-color overlapping solid density value of Yellow and Black,
Dcmy: three-color overlapping solid density value of Cyan, Magenta and Yellow,
Dkcm: three-color overlapping solid density value of Cyan, Magenta and Black,
Dkcy: three-color overlapping solid density value of Cyan, Yellow and Black,
Dkmy: three-color overlapping solid density value of Magenta, Yellow and Black,
Dcmyk: four-color overlapping solid density value of Cyan, Magenta, Yellow and Black, and
$\lambda$ : wavelength region of each of R, G, B, I, for example, R = 650 nm, G = 550 nm, B = 450 nm, and I = 800 nm.

Preferably, the target color mixture halftone density setting step includes a data acquisition step of acquiring kcmy tone values data and an ICC profile of a printing object picture from the outside, and a color mixture halftone density conversion step of converting the tone values of the noticed pixel region into a color mixture halftone density using the ICC profile and a device profile of the IRGB densitometer, the color mixture halftone density of the noticed pixel region converted at the color mixture halftone density conversion step being set as the target color mixture halftone density.

Preferably, the device profile is a conversion table which defines a corresponding relationship among tone values, color mixture halftone densities and color coordinate values, and the color mixture halftone density conversion step includes a first color coordinate value conversion step of converting the tone values of the noticed pixel into a color coordinate value using the ICC profile, a color mixture halftone density candidate selection step of selecting a plurality of color mixture halftone density candidates corresponding to the color coordinate value of the noticed pixel using the conversion table, a second color coordinate value conversion step of converting the tone values of the noticed pixel into a color coordinate value using the conversion table, a color difference calculation step of calculating a color difference between the two color coordinate values obtained at the first and second color coordinate value conversion steps, a tone values variation amount calculation step of calculating a variation amount of the tone values corresponding to the color difference calculated at the color difference calculation step, a virtual tone value calculation step of arithmetically operating virtual tone values by adding the variation amount arithmetically operated at the tone values variation amount calculation step to the tone values of the noticed pixel region, and a selection step of referring to the conversion table to select a color mixture halftone density candidate which most corresponds to the virtual tone values arithmetically operated at the virtual tone value calculation step from among the plural color mixture halftone density candidates selected at the color mixture halftone density candidate selection step, the selected color mixture halftone density candidate being set as the color mixture halftone density of the noticed pixel region at the color mixture halftone density conversion step.

Preferably, at the data acquisition step, bitmap data of the printing object picture are acquired first, and then, data produced by converting the bitmap data into low-resolution data corresponding to CIP4 data is used as the kcmy halftone dot area data.

Preferably, at the noticed pixel region selection step, a region in which the autocorrelation is high regarding each ink color is selected in a unit of a sensor pixel of the IRGB densitometer, and the selected region is set as the noticed pixel region for each ink color.

Preferably, the region in which the autocorrelation is high at the noticed pixel region selection step is all pixel groups whose autocorrelation is higher than a condition set in advance for each ink color, and, at the noticed pixel setting step, the pixel group is automatically extracted using a computer.

According to the present invention as set forth in claim 20, there is provided a pre-printing confirmation apparatus of a picture color tone for a printing press, comprising a first conversion section for converting tone value data k, c, m and y of plate making data into color coordinates (L*a*b*) using a device profile of a printing press to be used for printing, a simulation printing tool, a second conversion section for converting the color coordinates (L*a*b*) obtained by the conversion into simulation printing tool color mixture halftone densities R, G and B (monitor) or simulation printing tool tone values k', c', m' and y' (printer) using a device profile of the simulation printing tool, and a decision section for comparing a color shade of an output obtained by outputting a picture according to the plate making data to the simulation printing tool in accordance with the simulation printing tool color mixture halftone densities R, G and B (monitor) or simulation printing tool tone values k', c', m' and y' (printer) obtained by the conversion with a color shade of a color sample of a target print to decide whether or not the color shade of the output is within a permissible range.

Preferably, the decision section performs the decision of the color shade for each ink supplying region of the printing press.

Preferably, the device profile of the printing press is produced based on a corresponding relationship obtained by printing a color scale of the Japan Color (ISO12642) or the like in advance with the reference density by the printing press.

Preferably, the first conversion section, second conversion section and decision section are provided as functional elements of a controlling apparatus of the simulation printing tool.

According to the present invention as set forth in claim 24, there is provided a picture color tone controlling apparatus for a printing press for controlling a picture color tone of a printing press to which the pre-printing confirmation method of a picture color tone for a printing press as set forth in any one of claims 1 to 8 is applied, comprising an ink supplying apparatus for supplying ink to eachofregions divided in a print i ng widthwise direction, a noticed pixel region selection section for selecting a noticed pixel region to be noticed as an object of color tone control in a printing picture, a target color mixture halftone density setting section for setting a target color mixture halftone density regarding the noticed pixel region selected by the noticed pixel region selection section, an IRGB densitometer disposed on a traveling line of a pressrun sheet obtained by printing, a color mixture halftone density measurement section for operating the IRGB densitometer to measure an actual color mixture halftone density for each noticed pixel region of the a pressrun sheet, a target tone value calculation section for calculating a target tone value for each ink color corresponding to the target color mixture halftone density based on a corresponding relationship between tone values and color mixture halftone densities set in advance, an actual tone value calculation section for calculating an actual tone value for each ink color corresponding to the actual color mixture halftone density based on the corresponding relationship between tone values and color mixture halftone densities, a target monochromatic halftone density calculation section for calculating a target monochromatic halftone density corresponding to the target tone value based on a corresponding relationship between tone values and monochromatic halftone densities set in advance, an actual monochromatic halftone density calculation section for calculating an actual monochromatic halftone density corresponding to the actual tone value based on the corresponding relationship between tone values and monochromatic halftone densities, a solid density difference calculation section for calculating a solid density difference corresponding to a difference between the target monochromatic halftone density and the actual monochromatic halftone density under the target tone value based on a corresponding relationship among tone values, monochromatic halftone densities and solid densities set in advance, and an ink supplying amount adjustment section for adjusting an ink supplying amount for each ink supplying width based on the solid density

Effects of the Invention

With the pre-printing confirmation method (claim 1) and apparatus (claim 19) of a picture color tone for a printing press of the present invention, since the device profile of a predetermined printing press and the device profile of a simulation printing tool (a personal computer and a monitor or a printer connected to the personal computer) can be used to output a picture according to plate making data to the simulation printing tool in accordance with color development according to the predetermined printing press. Therefore, if this output is referred to, then the color shade when the picture is printed by the predetermined printing press can be confirmed in advance before printing is performed actually. Consequently, an appropriate color tone can be obtained from the beginning of printing by suitably changing a printing condition or the like based on a result of the confirmation. As a result, it becomes possible to suppress occurrence of paper loss and prevent failure in printing.

Further, where the color shade is bad (not within the first permissible range), the print making curve is corrected, and the corrected plate making curve of the printing press is used to correct the plate making data, whereafter the pre-printing confirmation process is carried out again. Therefore, the plate making curve can be corrected appropriately while it is confirmed in advance whether or not the correction of the plate making curve is appropriate.

Further, where the color shade is bad (not within the second permissible range or not within the permissible range), for example, a changing ratio is set, and the target tone values of the individual ink colors or the target color mixture halftone density corresponding to the target tone values is changed and corrected in response to the set changing ratio. Then, the pre-printing confirmation process is carried out again based on the corrected target tone values or target color mixture halftone density. Therefore, the target color mixture halftone density can be corrected appropriately while it is confirmed in advance whether or not the change or correction of the target color mixture halftone density is appropriate.

Particularly where the color shade is very bad (not within the first permissible range), this cannot sometimes be coped with by correction of the target values in the color tone control. However, in this instance, since the printing plate itself is corrected, the color tone can be made appropriate from the beginning of printing. On the other hand, where the color shade is slightly bad (is within the first permissible range but not within the second permissible range), this can be coped sufficiently with correction of the target values in the color tone control which is comparatively simple correction. Therefore, this is coped with correction of the target values, and failure in color shade can be coped efficiently.

With the plate making method (claim 9) of the present invention, where the color shade is bad (not within the first permissible range), the device profile of the printing press is used to correct the plate making curve so as to become coincident with the plate making curve of the printing press, and plate making is performed using the corrected print making curve of the printing press. Therefore, the printing plate itself is produced by correcting the same so as to conform to the characteristic of the printing press to be used for printing, and consequently, an appropriate color tone can be obtained from the beginning of printing. Consequently, it is possible to suppress incidence of paper loss and prevent failure in printing as described above.

With the picture color tone controlling method (claim 10) and apparatus (claim 23) for a printing press of the present invention, since not a spectrometer but an IRGB densitometer can be used to perform the color tone control, the cost required for the measuring section can be reduced, and also it is possible to sufficiently cope with such a high-speed printing press as a newspaper rotary press.

Further, where the color shade is bad (not within the first permissible range), by changing the printing plate itself to that which conforms to a characteristic of the printing press to be used for printing, the color tone can be made appropriate from the beginning of printing. Consequently, it is possible to suppress incidence of paper loss and prevent failure in printing as described above.

On the other hand, where the color shade is bad (not within the second permissible range or not within the permissible range), since the target color mixture halftone density is corrected appropriately and printing is performed based on the corrected target color mixture halftone density, the color tone can be made appropriate from the beginning of printing. Consequently, it is possible to suppress incidence of paper loss and prevent failure in printing as described above.

Further, where the target color mixture halftone density is to be changed, for example, an operator can suitably change the value of the changing ratio (= changing coefficient) for the target density (target color value) to change the target tone value while checking a printing state. Therefore, printing can be performed with a color tone conforming more to a request from a customer, and printing of higher marketability can be implemented by the color tone control. Particularly, if the target tone values obtained by conversion from the color mixture halftone density into tone values of monotonous colors of the individual inks are corrected, then since the target density is changed thereby, change of the target density can be carried out with certainty for an ink color for which such change is required.

Further, when an actual tone value is to be calculated from an actual color mixture halftone density and when a target tone value is to be calculated from a target color mixture halftone density, since the solid density values Di ($\lambda$) of each of the wavelengths 1 for each of the colors of I (infrared radiation), R (red), G (green), B (blue) are acquired as a corresponding relationship between tone values and color mixture halftone densities and the publicly known expanded Neugebauer expression (A) wherein the Nielsen coefficient is set, for example, to a predetermined value n with which the relationship between the tone value and the color mixture halftone density becomes a linear relationship is used, the corresponding relationship in the color space can be extended readily to the outside of the color space. Therefore, even for the region on the outer side of the color space which is defined by the reference density, conversion from a color mixture halftone density into a tone value can be performed with certainty. For example, even if the changing ratio is set to the increasing side and the target color mixture halftone density corresponding to the target tone value changed in accordance with the changing ratio is set to a density exceeding the color space defined by the reference density and then the actual color mixture halftone density in printing becomes a density exceeding the color space defined by the reference density, a virtual actual tone value where the tone value exceeds 100 % can be determined with certainty, and color tone control in accordance with the changing ratio can be carried out.

Further, when a target color mixture density is to be set, where kcmy tone value data of a printing object picture are acquired and the tone values of the data are converted into color mixture halftone densities and then that one of the converted color mixture halftone densities which is in the noticed pixel region is set as a target color mixture halftone density, if a conversion table produced based on a corresponding relationship obtained in advance by printing a color scale of the Japan Color (ISO12642) or the like under the standard density or the publicly known Neugebauer expression (B) wherein solid density values Di($\lambda$) of each of the wavelengths $\lambda$ of the colors of I (infrared light), R (Red), G (Green), and B (Blue) are acquired from data obtained in advance by printing a color scale of the Japan Color (ISO12642) or the like under the standard density and then dot gain corrected is used, then the target color mixture halftone density can be calculated with a high degree of accuracy.

On the other hand, where the kcmy tone value data of a printing object picture can be acquired from the outside and also the ICC profile can be acquired in addition to the kcmy tone value data of the printing object picture, the color tone can be controlled based on the ICC profile obtained from a printing requesting source or the like and a print of a color tone desired by the printing requesting source or the like can be obtained readily.

Further, if, as a setting method of a notice pixel region, a pixel having the highest density sensitivity for each ink color or a pixel having the highest autocorrelation to the tone value for each ink color is calculated and automatically extracted and then set as a noticed pixel region, then the noticed pixel region can be set readily.

Brief Description of the Drawings

[FIG. 1] FIG. 1 is a flow chart illustrating an embodiment of a pre-printing confirmation method and apparatus of a picture color tone for a printing press and a plate making method of the present invention.

[FIG. 2] FIG. 2 is a flow chart illustrating an embodiment of the pre-printing confirmation method and apparatus of a picture color tone for a printing press of the present invention.

[FIG. 3] FIG. 3 is a view illustrating an embodiment of the pre-printing confirmation method of a picture color tone for a printing press of the present invention and showing a flow of printing-related data before printing.

[FIG. 4] FIGS. 4A and 4B are views illustrating an embodiment of the pre-printing confirmation method and apparatus of a picture color tone for a printing press and the plate making method of the present invention, and wherein FIG. 4A illustrates the pre-printing confirmation method and apparatus and FIG. 4B illustrates the plate making method.

[FIG. 5] FIG. 5 is a view schematically showing a general configuration of an offset rotary press for newspapers according to a first embodiment of picture color tone control of the present invention.

[FIG.6] FIG. 6 is a functional block diagram showing a color tone controlling function of a calculation apparatus of FIG. 5.

[FIG. 7] FIG. 7 is a flow chart illustrating a processing flow of color tone control by the calculation apparatus of FIG. 5.

[FIG. 8] FIG. 8 is a view illustrating expansion of a color space according to the first embodiment of the picture color tone control of the present invention.

[FIG. 9] FIG. 9 is a view showing a corresponding relationship between tone values and a color mixture halftone density according to the first embodiment of the picture color tone control of the present invention.

[FIG. 10] FIG. 10 is a map illustrating a corresponding relationship of a monochromatic halftone density with the tone values.

[FIG. 11] FIG. 11 is a map illustrating a corresponding relationship of a solid density with the tone values and the monochromatic halftone density.

[FIG. 12] FIG. 12 is a flow chart illustrating a processing flow of color tone control according to a third embodiment of the present invention.

[FIG. 13] FIG. 13 is a view illustrating a plate making curve.

Description of Reference Characters

1 line sensor type IRGB densitometer
2a, 2b, 2c, 2d printing unit
3 blanket cylinder
4 printing cylinder
5 ink roller group
6 ink fountain roller
7 ink key
8 printing sheet
10 arithmetic operation apparatus
11 DSP
12 PC
14 color conversion section
15 ink supplying amount arithmetic operation section
16 online control section
17 key opening limiter arithmetic operation section
20 control built in printing press
30 touch panel

Best Mode for Carrying out the Invention

In the following, preferred embodiments of the present invention are described with reference to the accompanying drawings.
Here, a pre-printing confirmation method and apparatus of the picture color tone for a printing press and a plate making method are described, and thereafter, a picture color tone controlling method and apparatus for a printing press which use the pre-printing confirmation method and apparatus and the plate making method are described.

(A) Embodiment of Pre-Printing Confirmation of the Picture Color Tone of a Printing Machine and Plate Making

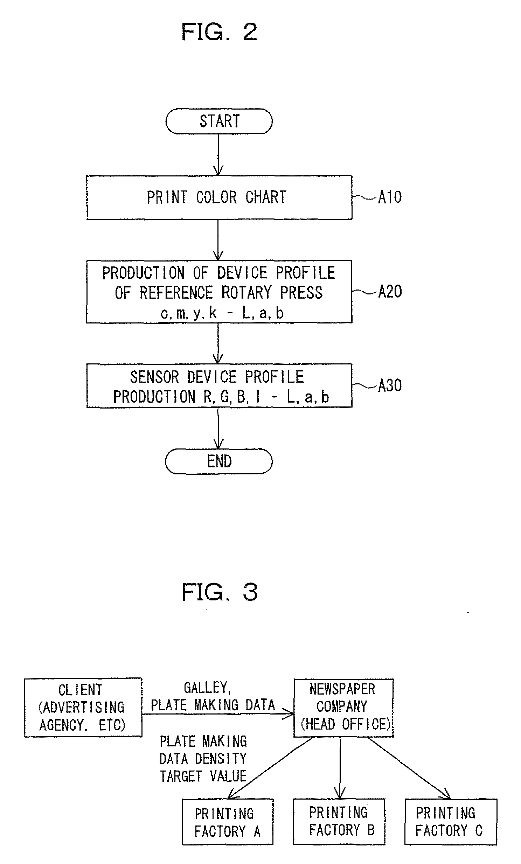

FIG. 3 is a view illustrating flows of printing-related databefore printing. As shown in FIG. 3, a case is assumed here wherein a newspaper company performs printing of an advertising face or the like, and the newspaper company receives an order for printing of an advertising face from a client such as, for example, an advertising agency. At this time, on the client side, plate making data for a produced advertising face is confirmed using a monitor or a printer of the agency itself, and, if there is no problem in the plate making data, then a sample printing picture is printed on printing paper by a printing press (a printer, a flatbed calibrating apparatus or the like) of the agency itself or a subcontract destination using the plate making data to produce calibration paper (galley). The plate making data includes data (tone value data) which determines tone values of colors of individual portions of a picture to be printed, and the plate making data and the sample galley are sent from the client side to the newspaper company.

In the newspaper company, normally, for example, the head office sends the plate making data and the sample galley to printing factories (for example, printing factories A to C). In each printing factory, plate making is performed based on the plate making data and a made printing plate is mounted on a printing press to perform printing. At this time, the ink supplying amount is controlled so that the color development density of an actual printing result approaches a target density value, for example, as in the technique disclosed in Patent Document 3.

The technique of the present embodiment is characterized in that, after plate making data and sample galley are sent from the client side to the head office of a newspaper company or the like, simulation printing (or display wherein printing is simulated) is performed using a simulation printing tool such as a personal computer and a monitor (or a printer) connected to the personal computer before printing so that a color shade (color tone) of a confirmation printing picture is confirmed beforehand.

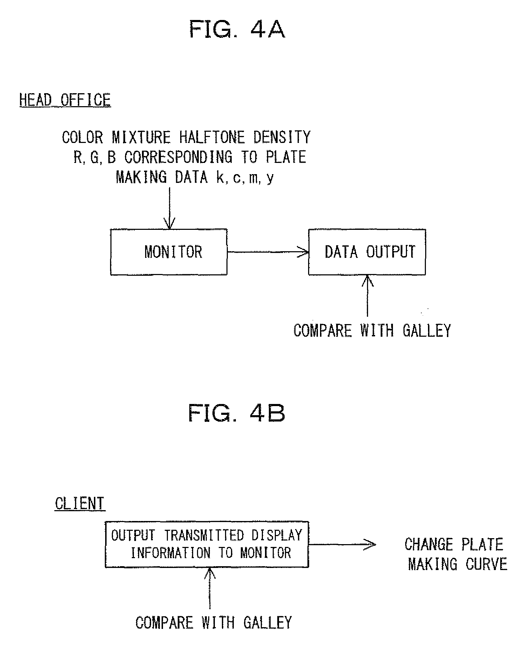

In particular, as shown in FIG. 4A, on the side of the head office of the newspaper company, plate making data k, c, m and y are converted, using a device profile of a reference rotary press and another device profile of a simulation printing tool (a monitor or a printer) on the head office side, into color development densities (color mixture halftone densities) R, GandBtobeoutputted to the monitor (or the printer), which is a simulation printing tool, corresponding to a color development state of the printing picture where printing is performed using a reference rotarypress in accordance with the plate making data k, c, m and y.

To this end, the device profile of the reference rotary press and the device profile of the simulation printing tool are required. Therefore, as shown in FIG. 2, a color chart (color scale) of the Japan Color (ISO12642) or the like is printed with a reference density by the reference rotary press (step A10). Then, the printed picture is measured by a sensor which can detect a color development density such as an IRGB densitometer, and a corresponding relationship (device profile of the reference rotarypress or ICC profile L*a*b*/kcmy) between tone values k, c, m and y and color coordinate values (L*a*b*) of the color chart is produced (step A20). Further, a corresponding relationship (sensor device profile L*a*b*/IRGB) between measurement values IRGB by the sensor and color coordinates (L*a*b*) is produced (step A30).

It is to be noted that the device profile of the monitor or the printer which is a simulation printing tool is produced by utilizing an ICC profile (cmyk/L*a*b*, RGB/L*a*b*) provided by the maker of the monitor or the printer or by outputting colors of the chart to the monitor or the printer and measuring the outputted colors as described above.

It is to be noted that tone values are sometimes referred to simply also as kcmy, color mixture halftone densities also as RGB or RGBI, and color coordinates also as Lab.

It is to be noted that the sensor device profile, the device profile (cmyk $\Leftrightarrow$ Lab) of the printing press or the like is an ICC profile if it is produced in the ICC format, and the format of them can be made coincide with a common format of simulation printing tools.

Then, an output of the simulation printing tool (a picture printed by the printer or a picture displayed on the monitor) is associated with the sample galley to compare the color shade of the output with the color shade of the color sample for a target print to decide whether or not the color shade of the output is within a permissible range.

Although this decision can be performed by visual observation by an operator who is concerned with plate making or printing on the newspaper company side, for example, the picture printed by the printer may be sent to the client side so that, on the client side, the color shade of the output is compared with a color shade of a galley of a color sample to decide whether or not the color shade of the output is within the permissible range. Or, the simulation printing tool may be provided on the client side so that the decision is performed by the client itself.

For example, as seen in FIG. 4B, the monitor as the simulation printing tool may be provided on the client side such that information (data) of the color development densities (color mixture halftone densities) R, G and B to be displayed on the monitor is transmitted from the newspaper company side so that the transmitted color development densities R, G and B are outputted to the monitor to allow the client itself to compare the color shade of the output with the color shade of the galley of the color sample to perform the decision. With this technique, if the sensor device profile and the device profile of the printing press are acquired by the client side in advance, then even if the plate making data is not sent to the newspaper company side, it is possible to cause the simulation printing tool of the client side to perform outputting (screen display on the monitor or output display by the printer) corresponding to the plate making data to perform the decision described above.

It is to be noted that, with the technique of the present embodiment, if the color shade of the output of the simulation printing tool is not within the permissible range, then either the plate making contents are changed (corrected) or the target density value of the color tone control described above is changed (corrected).

PIG. 1 is a flow chart illustrating such pre-printing confirmation and plate making as well as change of the target density value as described above. It is to be noted that it is assumed that the device profile of the reference rotary press, the sensor device profile and the device profile of the simulation printing tool (printer or monitor) are acquired in advance.

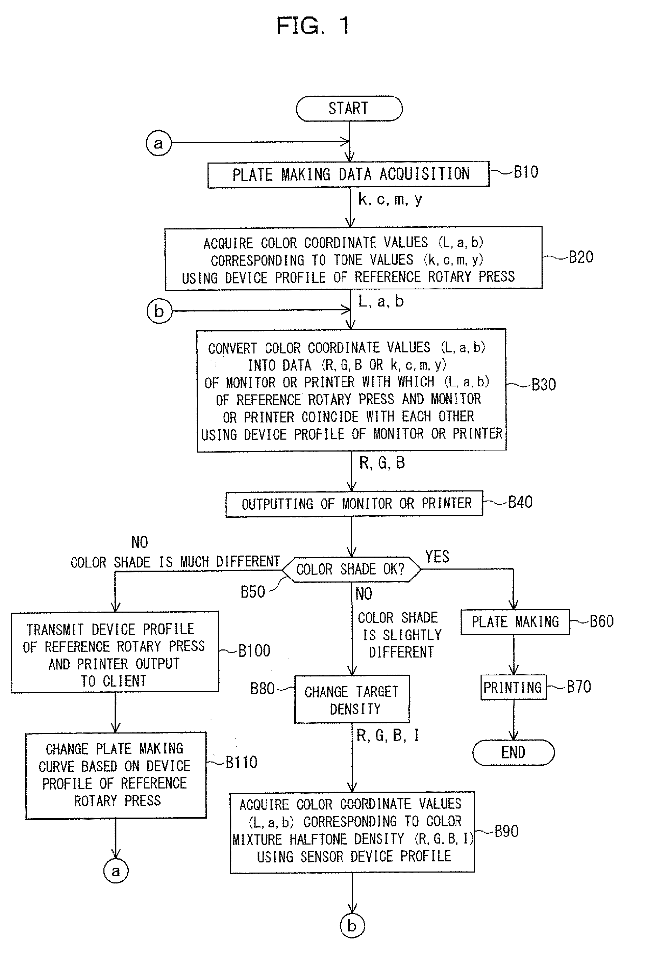

As seen in FIG. 1, the plate making data k, c, m, y are first acquired from an upstream plate making system (plate making data acquisition step, step B10), and the plate making data k, c, m, y are converted into color coordinate values (L*a*b*) using the reference rotary press device profile (ICC profile) to acquire the color coordinate values (L*a*b*) (first conversion step, step B20). Further, the acquired color coordinate values (L*a*b*) are converted, using the device profile (ICC profile) of the simulation printing tool (printer or monitor), into color-converted data R, G, B or k, c, m, y, which are to be provided to the monitor or the printer which exhibits coincidence in L*a*b* between the two profiles (reference rotary press device profile and device profile of the simulating printing tool), to acquire the color-converteddata R, G, B or k, c, m, y (second conversion step, step B30). Then, the simulation printing tool (monitor or printer) is operated to output a picture according to the plate making data of the color-converted data k, c, m, y or R, G, B (output step, step B40).

It is decided whether or not the color shade is OK where it is assumed that the output of the simulation printing tool (monitor or printer) is regarded as a result of simulation of the color of the reference rotary press (decision step, step B50).

Here, results of the decision are classified into three types including a result that the color shade is OK (decision 1), another result that the color shade is not OK but the difference in color shade is small (decision 2) and a further result that the color shade is not OK and the difference in color shade is great (decision 3).

If the color shade is OK (decision 1), then plate making is performed by CTP or the like with the plate making data k, c, m, y reflected as they are (step B60), and printing is performed (step B70). In short, the plate making curve in this instance becomes a linear plate making curve of the gradient 1 [refer to FIG. 13].

On the other hand, if the color shade is not OK but the difference in color shade is small (decision 2), then the reference rotary press target color mixture halftone densities Io, Ro, Go, Bo of the plate making data pixels (step B80), and the target color mixture halftone densities Io, Ro, Go, Bo are converted into color coordinate values (L*a*b*) using the sensor device profile to acquire the color coordinate values (L*a*b*) (step B90). In this instance, the processing returns to step B30, at which the color coordinate values (L*a*b*) changed in response to the change of the target color mixture halftone densities are converted, using the device profile of the simulation printing tool (printer or monitor), into data R, G, B or k, c, m, y, which are to be outputted to the simulation printing tool, to acquire the data R, G, B or k, c, m, y. Thereafter, processes similar to those described hereinabove are performed. The target color mixture halftone density change is hereinafter described.

On the other hand, if the difference in color shade is great (decision 3), then the reference rotary press device profile and the printer output outputted in the newspaper company are sent to the client (step B100), and also it is effective for the client side to perform change of the plate making curve based on the reference rotary press device profile (step B110). The plate making curve in this instance becomes a suitably curved curve (refer to FIG. 13). Further, in this instance, since the plate making data is varied, the processing returns to step B10 to perform processes similar to those described hereinabove again.

Accordingly, where the difference in color shade is great (decision 3), since the plate making curve is corrected and the corrected plate making curve is used to correct the plate making data and then the pre-printing confirmation process is carried out again, the plate making curve can be corrected appropriately while it is confirmed beforehand whether or not correction of the plate making curve is appropriate.

On the other hand, where the color shade is slightly different (decision 2), since the target tone value data are changed and corrected and the pre-printing confirmation process is carried out again based on the corrected target tone value data, the target color mixture halftone density can be corrected appropriately while it is confirmed beforehand whether or not change or correction of the target color mixture halftone density is appropriate.

Particularly where the difference in color shade is great (decision 3), although sometimes this cannot be coped with correction of the target values in the color tone control, in this instance, since the printing plate itself is corrected, the color tone can be standardized with certainty from the beginning of printing. On the other hand, where the color shade is slightly different (decision 2), since this can be coped sufficiently with correction of the target values in the color tone control which is comparatively simple correction, target value correction can be performed more readily and failure in color shade can be coped efficiently.

It is to be noted here that, as a criterion for the color shade, a first permissible range which is a reference for decision of whether or not the difference in color shade is great and a second permissible range which is a reference for decision of whether or not the color shade is OK (naturally the second permissible range is within the first permissible range) are provided as a sense reference according to visual observation of a printing operator or a person in change on the client side, and whether or not the color shade is OK is decided as whether or not the color shade is within the second permission range, but whether or not the difference in color shade where the color shade is not OK is great is decided as whether or not the color shade is within the first permissible range.

Or, also it is possible to actually measure the Lab of a galley by means of a scanner or the like and confirm or actually measure the Lab output of the simulation printing tool with data and then digitize (color difference $\Delta E$) the difference between the Lab of the galley and the Lab of the simulation printing tool to perform comparison. In this instance, it is possible to provide a threshold value $\Delta E_S$ for the color difference $\Delta E$ such that, if the color difference $\Delta E$ does not exceed the threshold value $\Delta E_S$, then it is decided that the color shade is OK, but if the color difference $\Delta E$ exceeds the threshold value $\Delta E_S$, then the color shade is not OK. Particularly where the first permissible range and the second permissible range are used to perform two-stage decision as described above, a threshold value (threshold value for the first permissible range) $\Delta E_{S1}$ for the decision of whether or not the difference in color shade is great and another threshold value (threshold value for the second permissible range) $\Delta E_{S2}$ for the decision of whether or not the color shade is OK (where $\Delta E_{S1} > \Delta E_{S2}$) may be set such that the decision is performed based on the threshold values.

It is to be noted that, if the permissible ranges described above are configured such that a Lab output of the simulation printing tool (monitor or printer) and a galley Lab are compared with each other to provide color difference threshold values and the color difference $\Delta E^*$ between the output Lab and the galley is compared with the color difference threshold values to make a decision such that, if the output Lab is within a second threshold value (for example, an average color difference $\Delta E^*$ of all pixels < 3, pixel: size corresponding to the sensor detection area) which defines the second permissible range, then the decision 1 is made, but if, although the outputs R, G, B are not within the second threshold value but within a first threshold value (for example, the average color difference ΔE* of all pixels < 6) which defines the first permissible range, then the decision 2 is made, whereas, if the outputs R, G, B are not within the first threshold value, then the decision 3 is made, then a decision section for performing decision mechanically can be configured.

(B) First Embodiment of Target Color Mixture Halftone Density Change

In the printing press (here, the reference rotary press) to which the pre-printing confirmation technique and the plate making technique described hereinabove are applied, printing is carried out while the picture color tone control hereinafter described is carried out. In the picture color tone control, target values (target color mixture halftone densities) Io, Ro, Go, Bo for the color development density are set, and the ink supplying amount is controlled so that the color development densities (color mixture halftone densities) I, R, G, B of a result of actual printing may approach the target color mixture halftone densities Io, Ro, Go, Bo. In particular, the set target color mixture halftone densities Io, Ro, Go, Bo and the detected actual color mixture halftone densities I, R, G, B are converted into target values (target tone values) for the monochromatic tone values (hereinafter referred to merely as tone values) using the respective device profiles. Further, the target tone values are converted into target monochromatic halftone densities based on a known corresponding relationship, and the difference between the actual density and the target density is detected on the monochromatic level. Then, the ink supplying amount is controlled so that the difference may become zero.

It is to be noted that, as regards the target color mixture halftone density of the simulation printing tool described above, the target color mixture halftone density for each pixel (particularly for each of the pixels of 1,200 dpi and 50 dpi) is calculated from the plate making data and converted into Lab. Then, the Lab is converted into output data (RGB or cmyk) for each pixel of the plate making data. In the present embodiment, a target color mixture halftone density in the control stage of a printing press represents an average density at a control point (noticed pixel) selected from the plate making data.

As a first technique for the target color mixture halftone density change, it is possible to set a changing ratio ra1 for the target color mixture halftone densities Io, Ro, Go, Bo and multiply the target color mixture halftone densities Io, Ro, Go, Bo by the changing ratio ra1 to change the target color mixture halftone density. However, also it is possible, as a second technique for the target color mixture halftone density change, to change the target color mixture halftone density by changing the target tone value paying attention to the fact that, in the picture color tone control, target tone values are calculated from target color mixture halftone densities Io, Ro, Go, Bo.

It is to be noted that, although a printing operator usually estimates the intensity of the strength of a single color of ink such as to want to intensify the cyan or weaken the black, actually if the cyan is intensified, then the RGB densities of the sensor are intensified, but if the black is weakened, then the IRGB densities are weakened. Therefore, a case wherein, even if the target color mixture halftone density is changed directly, the will of the operator may not be satisfied is supposed. If this point is taken into consideration, then it is considered that the second technique which pays attention to the target tone value is more advantageous.

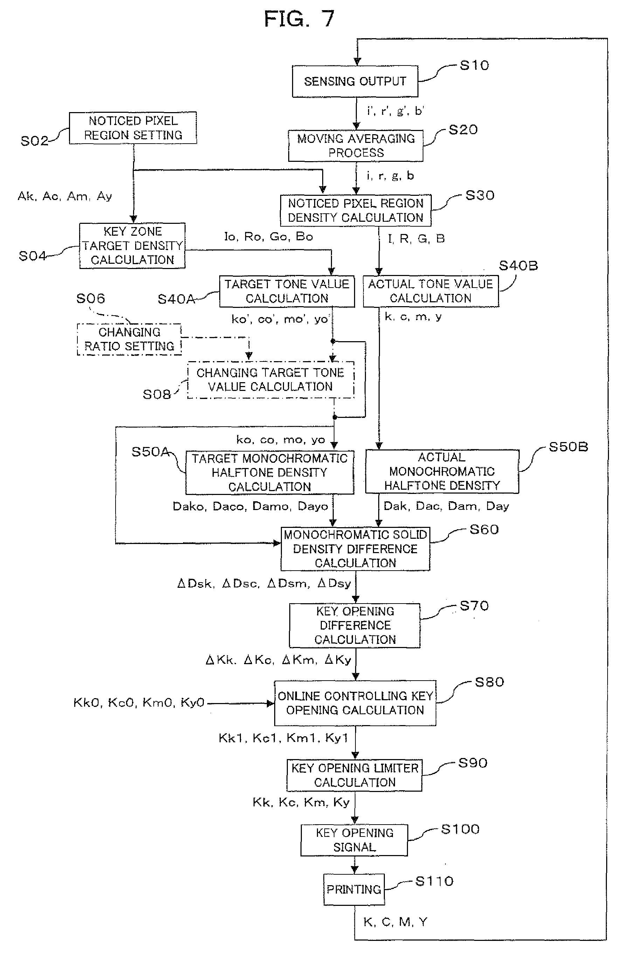

In particular, where it is desired to change the target tone value, the operator or the client side sets a changing ratio ra for the density change and inputs the changing ratio ra to the PC 12 (changing ratio setting step, refer to step S06 of FIG. 7). The setting of the changing ratio ra at step S06 is performed as occasion demands while the operator or the client side observes the output of the simulation printing tool (monitor or printer).

The target tone values ko', co', mo', yo' of the ink colors calculated by the target tone value calculation step are multiplied by the changing ratio ra set at step S06 to change the target tone values ko, co, mo, yo (target tone value changing step, refer to step S08).

In this manner, where the target tone values ko', co', mo', yo' of the ink colors are changed, the target tone values ko', co', mo', yo' are converted into color coordinate values (L*a*b*) of the pixels of the plate making data using the device profile of the printing press to acquire the color coordinate values (L*a*b*) at step B90 described hereinabove with reference to FIG. 1. Also in this instance, the processing thereafter returns to step B30 to perform processes similar to those described hereinabove.

In the following, picture color tone control for a printing press which uses the pre-printing confirmation technique according to the target color mixture halftone density change described above is described.

(C) First Embodiment of the Picture Color Tone Controlling Method and Apparatus for a Printing Press

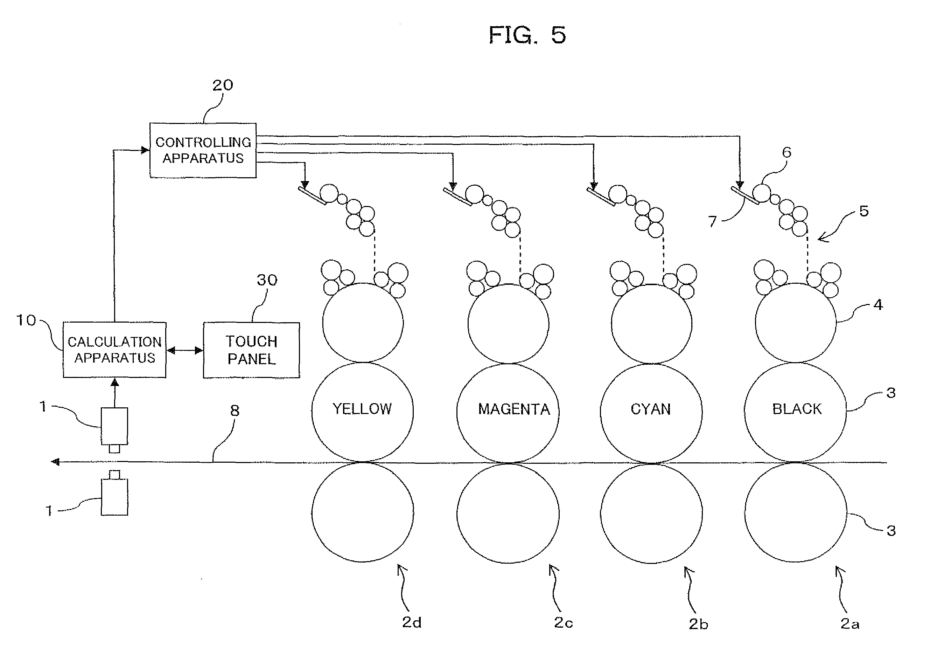

FIG. 5 is a view showing a general configuration of an offset rotary press for newspapers according to a first embodiment of a picture color tone controlling method and apparatus for a printing press of the present invention. The offset rotary press for newspapers of the present embodiment is a double-sided printing press for multi-color printing and includes printing units 2a, 2b, 2c and 2d disposed for different ink colors [black (k), cyan (c), magenta (m) and yellow (y)] along a transport path of a printing sheet 8. In the present embodiment, each of the printing units 2a, 2b, 2c and 2d includes an ink supplying apparatus of the ink key type which includes a plurality of ink keys 7 and an ink fountain roller 6. In the ink supplying apparatus of the type described, the ink supplying amount can be adjusted by the gap amount (the gap amount is hereinafter referred to as ink key opening) of each of the ink keys 7 from the ink fountain roller 6. The ink keys 7 are juxtaposed in the printing widthwise direction, and the ink supplying amount can be adjusted in a unit of the width of each of the ink keys 7 (the ink supplying unit width by each ink key 7 is hereinafter referred to as key zone). The ink whose supplying amount is adjusted by each ink key 7 is kneaded to a suitable degree to form a thin film in an ink roller group 5 and then supplied to a printing surface of a printing cylinder 4. Then, the ink sticking to the printing face is transferred as a picture to the printing sheet 8 through a blanket cylinder 3. It is to be noted that, though not shown in FIG. 5, since the offset rotary press for newspapers of the present embodiment is for double-sided printing, each of the printing units 2a, 2b, 2c and 2d includes a pair of blanket cylinders 3, 3 disposed across the transport path of the printing sheet 8, and a printing cylinder 4 and an ink supplying apparatus are provided for each of the blanket cylinders 3.

The offset rotary press for newspapers includes a pair of line sensor type IRGB densitometers 1 on the further downstream of the most downstream printing units 2d. Each of the line sensor type IRGB densitometers 1 is a measuring instrument for measuring a color of a picture on the printing sheet 8 as reflection densities (color mixture halftone densities) of I (infrared radiation), R (red), G (green) and B (blue) on a line in the printing widthwise direction. The offset rotary press for newspapers can measure the reflection density over the overall printing sheet 8 or measure the reflection density at an arbitrary position of the printing sheet 8. Since the offset rotary press for newspapers is for double-sided printing, the line sensor type IRGB densitometers 1 are disposed on the opposite front and rear sides across the transport path of the printing sheet 8 so that they can measure the reflection density on the opposite front and rear faces of the printing sheet 8.

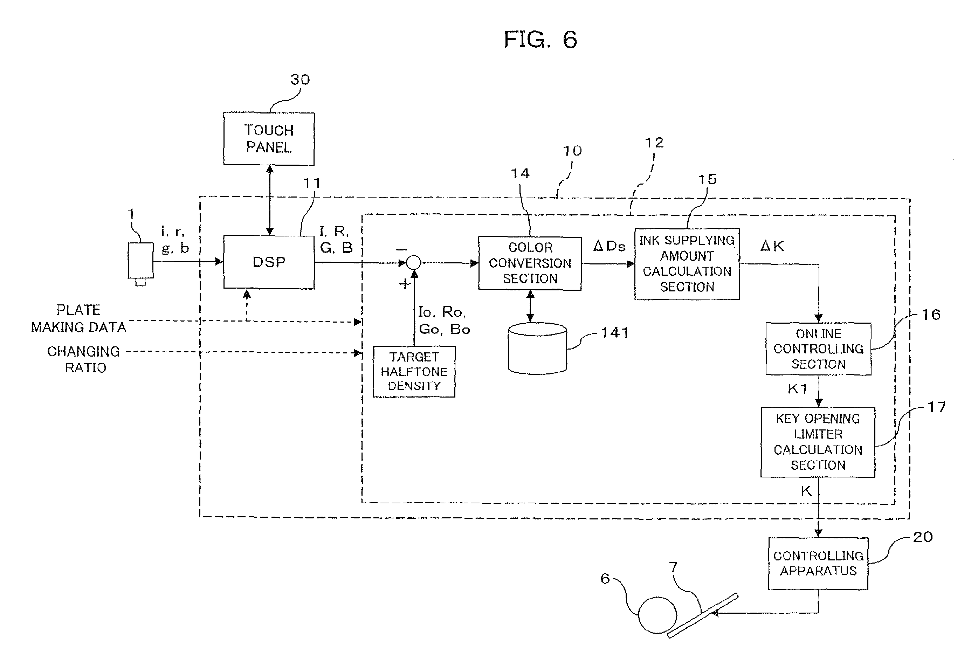

The reflection densities measured by the line sensor type IRGB densitometers 1 are transmitted to a calculation apparatus 10. The calculation apparatus 10 is an apparatus for arithmetically operating control data of the ink supplying amount, and performs arithmetic operation based on the reflection densities measured by the line sensor type IRGB densitometers 1 to calculate the opening of each of the ink keys 7 for making the color of the picture of the printing sheet 8 coincide with a target color. Here, FIG. 6 is a view showing a general configuration of a picture color tone controlling apparatus for the offset rotary press for newspapers according to the embodiment of the present invention and simultaneously is a functional block diagram showing the calculation apparatus 10 with attention paid to a color tone controlling function.

The calculation apparatus 10 includes a digital signal processor (DSP) 11 and a personal computer (PC) 12 disposed separately from the printing press. The PC 12 has functions as a color conversion section 14, an ink supplying amount arithmetic operation section 15, an online control section 16 and a key opening limiter arithmetic operation section 17 allocated thereto. It is to be noted that, if the performance of the personal computer is sufficiently high, then the DSP may not be used, and all of the functions of the calculation apparatus 10 may be implemented by the personal computer. Naturally, if quick processing is demanded, then the DSP may be suitably used. The line sensor type IRGB densitometers 1 are connected to the input side of the calculation apparatus 10, and a control apparatus 20 built in the printing press is connected to the output side of the calculation apparatus 10. The control apparatus 20 functions as ink supplying amount adjusting means for adjusting the ink supplying amount for each of the key zones of the ink keys 7. The control apparatus 20 controls an opening/closing apparatus not shown for opening and closing each of the ink keys 7 and can adjust the key opening independently for each ink key 7 of each of the printing units 2a, 2b, 2c and 2d. Further, a touch panel 30 as a display apparatus is connected to the calculation apparatus 10. The touch panel 30 can be used to display a printing surface of the printing sheet 8 whose image is picked up by the line sensor type IRGB densitometer 1 or a printing surface whose color is developed from plate making data and select an arbitrary region on the printing surface with a finger.

FIG. 7 is a view illustrating a processing flow of color tone control by the calculation apparatus 10. In the following, the processing substance of color tone control by the calculation apparatus 10 is described principally with reference to FIG. 7.

It is to be noted that, before the color tone control is performed, solid density values $Di(\lambda)$ of each of the wavelengths $\lambda$ of I (infrared radiation), R(red), G(green), B (blue) are acquired from data obtained in advance by printing a color scale of the Japan Color (ISO12642) or the like in the standard density. In particular, a color scale of the Japan Color (ISO12642) or the like is printed in advance in the standard density using a printing press to be used, and the density is detected by the IRGB densitometer based on the printing result of the color scale. Consequently, the solid density value $Di(\lambda)$ of each color (each of monochromes and color mixtures of two, three or four colors) of each of the wavelengths $\lambda$ can be acquired. As long as the characteristic of the printing press is not varied by secular degradation or the like, the solid density values $Di(\lambda)$ can be utilized after the determination is performed once.

Further, plate making data are inputted in advance to the calculation apparatus 10, and the calculation apparatus 10 acquires k, c, m, y data of each pixel from the plate making data in advance.

In the color tone control, after processes at steps S02 and S04 illustrated in FIG. 7 are performed, printing is started based on a result of the processes, and then, processes at steps other than steps S40A and S50A from among steps S10 to S110 are performed repetitively in a cycle set in advance. Basically, the processes at step S06 and S08 are carried out suitably by interruption for necessary ink color as occasion demands while the operator or the like confirms a printed matter after the printing is started. However, for example, if a phenomenon that the black becomes intensified every time is grasped, then also such a countermeasure as to perform suitable change before printing is sometimes taken. Further, it is necessary to carry out a process at step S40A only in a first control cycle after printing is started, but thereafter, the value obtained in the first controlling cycle is appropriated. It is necessary to carry out a process at step S50A only in the first control cycle when printing is started or when the processes at steps S06 and S08 are carried out, but thereafter, the value obtained at step S50A is appropriated.

First, a noticed pixel region (hereinafter referred simply also as noticed point) is set (step S02). Then, the process of the color tone control is performed based on the set noticed pixel region.

Automatic setting of the noticed pixel region is described. The DSP 11 of the calculation apparatus 10 selects a region having a high autocorrelation for each ink color from among kcmy tone value data obtained based on the plate making data, and the selected region is automatically set as the noticed pixel region corresponding to each ink color for each ink color.

It is to be noted that, while the plate making data are given as bitmap data, in order to set a noticed pixel region, the bitmap data are converted into low-resolution data equivalent to CIP4 data according to the format of the printing press and then a process is performed in a unit of a pixel of a sensor described below.

In particular, the region having a high autocorrelation for each ink color is a region in which the autocorrelation sensitivity H has a value higher than a predetermined value set in advance and is a region of a pixel unit of the sensor (IRGBdensitometer) 1. The pixel unit of the sensor is a minimum unit of the resolution of the sensor (IRGB densitometer) 1. In particular, a pixel group formed by collecting a great number of pixels of the plate making data corresponds to one pixel (one block) of the sensor pixel unit. For example, where the low-resolution data of the CIP4 are of 50.8 dpi and the resolution of 1 block of the sensor 1 is 25.4 dpi, a region of 2 pixels in the vertical direction by 2 pixels in the horizontal direction (in the pixel unit of the plate making data, $2 \times 2 = 4$ pixels) is one pixel unit of the sensor pixel unit.

The autocorrelation sensitivities H, for example, the autocorrelation sensitivity Hc of cyan, can be represented as "$Hc = c^n/(c + m + y + k)$" using pixel area ratio data (c, m, y, k). Where the value of the autocorrelation sensitivity Hc is compared with a reference autocorrelation sensitivity value (predetermined value) $H_0$ set in advance, if the value of the autocorrelation sensitivity Hc is higher than the reference autocorrelation sensitivity value $H_0$, then it is calculated that the region has a high autocorrelation with regard to cyan. Similarly, also with regard to different ink colors, the value of the autocorrelation sensitivity H is calculated and individually compared with the reference autocorrelation sensitivity value (predetermined value) $H_0$ set in advance. In this instance, for example, approximately 1.3 is selected as the value of the exponent value n.

It is to be noted that the reference autocorrelation sensitivity value $H_0$ can be set by inputting operation of the operator. Therefore, it is possible to set the reference autocorrelation sensitivity value $H_0$ to a rather high value to set the noticed pixel region restrictively to a region having a considerably high autocorrelation so that the density detection sensitivity is raised from a point which is of a monochrome of the pertaining ink and has a high tone thereby to raise the accuracy of the color tone control although the noticed pixel region decreases. Or, it is possible to set the reference autocorrelation sensitivity value $H_0$ to a rather low value to set the noticed pixel region including even a region in which the autocorrelation is not very high so that the noticed pixel region is expanded thereby to raise the accuracy of the color tone control although the density detection sensitivity drops. Naturally, a recommendable value (for example, an average autocorrelation value over the entire picture) of the reference autocorrelation sensitivity value $H_0$ is inputted in advance, and an unskilled operator can utilize the recommendable value. Further, inprinciple, while the reference autocorrelation sensitivity value $E_0$ is commonly used for the different ink colors, also it is a possible idea to make the reference autocorrelation sensitivity value $H_0$ different among the different ink colors.

Then, a target color mixture halftone density is set for the set noticed pixel region of each ink (step S04). In particular, the calculation apparatus 10 has pixel tone values (or key zone average line ratio) Ak, Ac, Am, Ay data of the noticed pixel regions in a unit of key zone acquired based on the plate making data. Further, the color conversion section 14 of the PC 12 includes a database 141 for coordinating the tone values and color mixture halftone densities of the individual ink colors with each other. The database 141 is produced with reference to data [conversion table which defines a corresponding relationship among tone values (k, c, m, y), color mixture halftone densities (I, R, G, B), and color coordinate values (L, a, b) of the standard colors] obtained by printing a printed matter under the newspaper printing Japan Color (ISO12642) standard established by the ISO/TC130 national commission and actually measuring the printed pattern by an IRGB densitometer. The color conversion section 14 calculates key zone average color mixture halftone densities corresponding to the inputted pixel tone values (or key zone average line ratio) Ak, Ac, Am, Ay of the noticed pixel regions in a unit of key zone and sets the calculated color mixture halftone densities as target color mixture halftone densities Io, Ro, Go, Bo.

It is to be noted that, if the dot gain is taken into consideration, then even if printing pictures have the same key zone average line ratios Ak, Ac, Am, Ay, the density value in color development differs depending upon the degree of density (50% plane halftone, 80% plane halftone, solid and so forth) of the halftone which forms the printing picture. Therefore, the color conversion section 14 is configured such that it can variably adjust the dot gain for each degree of density of the halftone and can set the target color mixture halftone densities Io, Ro, Go, Bo with the dot gain taken into consideration using a parameter calculated based on the dot gain when the line ratios Ak, Ac, Am, Ay are converted into the color mixture halftone densities Io, Ro, Go, Bo. It is to be noted that dot gain correction for setting the target color mixture halftone density for the pixel tone values of the plate making data with the dot gain taken into consideration is described in connection with a second embodiment hereinafter described.

After the target color mixture halftone densities Io, Ro, Co, Bo are set in such a manner as described above, printing is started and processes at steps beginning with step S10 are executed repetitively. First, at step S10, the line sensor type IRGB densitometer 1 measures the reflected light amounts i', r', g', b' of each of the pixels on the overall face of the overall printing sheet 8. The reflected light amounts i', r', g', b' of the pixels measured by the IRGB densitometer 1 are inputted to the DSP 11.

The DSP 11 performs, at step S20, moving averaging in a unit of a predetermined number of prints with regard to the reflected light amounts i', r', g', b' of the pixels to calculate reflected light amounts i, r, g, b of the pixels from which noise components are removed. Then, at step S30, the reflected light amounts i, r, g, b of the noticed pixel regions are averaged for each key zone to calculate color mixture halftone densities (actual color mixture halftone densities) I, R, G, B with reference to a reflected light amount at a blank portion. If only the average line ratios of the ink key zones are available, then the reflected light amounts i, r, g, b of the key zones are averaged for each key zone to calculate color mixture halftone densities (actual color mixture halftone densities) I, R, G, B with reference to a reflected light amount at a blank portion. For example, where the reflected light amount of infrared radiation at a blank portion is represented by ip and an average reflected light amount of the infrared radiation in the key zones is represented by ik, the actual color mixture halftone density I of the infrared radiation can be calculated from $I = \log_{10}(ip/ik)$. The color mixture halftone densities I, R, G, B of each noticed pixel region calculated by the DSP 11 are inputted to the color conversion section 14 of the PC 12.

The color conversion section 14 performs the processes at steps S40A, S40B, S50A, S50B and S60. First, at step S40A, the target color mixture halftone densities Io, Ro, Go, Bo set at step S04 are calculated individually, and at step S40B, the tone values of each ink color corresponding to the actual color mixture halftone densities I, R, G, B calculated at step S30 are calculated individually. The database 141 is used for the arithmetic operations, and the tone values of each ink color corresponding to the target color mixture halftone densities Io, Ro, Go, Bo are calculated as target tone values ko, co, mo, yo and the tone values of each ink color corresponding to the actual color mixture halftone densities I, R, G, B are calculated as actual tone values k, c, m, y.

Here, to the database 141, not only the conversion table [hereinafter referred to sometimes as look-up table (LUT)] produced based on the printing result obtained by printing the color scale of the Japan Color (ISO12642) or the like under the standard density is inputted as described hereinabove. Meanwhile, also a publicly known expanded Neugebauer expression which is produced based on the printing result described above and wherein the Nielsen coefficient (Yule-Nielsen coefficient) n is set to a predetermined value n (n is set, for example, to n $\geq$ approximately 100) with which the relationship between the tone values and the color mixture halftone density value becomes substantial linear is inputted.

[Expression 3]

$$10^{-Da(\lambda)/n} = (1 - k)(1 - c)(1 - m)(1 - y)$$

$$+ k(1 - c)(1 - m)(1 - y)10^{-Dk(\lambda)/n}$$

$$+ c(1 - k)(1 - m)(1 - y)10^{-Dc(\lambda)/n}$$

$$+ m(1 - k)(1 - c)(1 - y)10^{-Dm(\lambda)/n}$$

$$+ y(1 - k)(1 - c)(1 - m)10^{-Dy(\lambda)/n}$$

$$+ kc(1 - m)(1 - y)10^{-Dkc(\lambda)/n}$$

$$+ km(1 - c)(1 - y)10^{-Dkm(\lambda)/n} + ky(1 - k)(1 - y)10^{-Dky(\lambda)/n}$$

$$+ cm(1 - k)(1 - y)10^{-Dcm(\lambda)/n} + cy(1 - k)(1 - m)10^{-Dcy(\lambda)/n}$$

$$+ my(1 - k)(1 - c)10^{-Dmy(\lambda)/n} + kcm(1 - y)10^{-Dkcm(\lambda)/n}$$

$$+ kcy(1 - m)10^{-Dkcy(\lambda)/n} + kmy(1 - c)10^{-Dkmy(\lambda)/n}$$

$$+ cmy(1 - k)10^{-Dcmy(\lambda)/n} + kcmy10^{-Dkcmy(\lambda)/n}$$

$$\cdots \quad (A)$$

where, Da ($\lambda$): color mixture halftone density value;
k, c, m, y: tone values of corresponding inks;
Di($\lambda$): solid density value of wavelength $\lambda$ of each color i (extracted from color scale data);
i: one of Cyan, Magenta, Yellow, Black and color mixture of them;
for example, Dc: solid density value of Cyan, Dm: solid density value of Magenta, Dy: solid density value of Yellow;
Dk: solid density value of Black;
Dcm: two-color overlapping solid density value of Cyan and Magenta, Dcy: two-color overlapping solid density value of Cyan and Yellow, Dmy: two-color overlapping solid density value of Magenta and Yellow;
Dkc: two-color overlapping solid density value of Cyan and Black, Dkm: two-color overlapping solid density value of Magenta and Black, Dky: two-color overlapping solid density value of Yellow and Black;
Dcmy: three-color overlapping solid density value of Cyan, Magenta and Yellow;
Dkcm: three-color overlapping solid density value of Cyan, Magenta and Black;
Dkcy: three-color overlapping solid density value of Cyan, Yellow and Black;
Dkmy: three-color overlapping solid density value of Magenta, Yellow and Black;
Dcmyk: four-color overlapping solid density value of Cyan, Magenta, Yellow and Black
$\lambda$: wavelength region for each of R, G, B, I, for example, R = 650 nm, G = 550 nm, B = 450nm, I = 800 nm; and
n: coefficient of Yule-Nielsen.

It is to be noted that c, m, y, k, kc, km, ky, cm, cy, my, kcm, kcy, kmy, cmy and kcmy in the expression (A) indicate the halftone dot ratios of the colors (monochromes or color mixtures). Further, regarding the color mixtures, for example, kc indicates the product of the tone values of black (k) and cyan (c), and, for example, kcmy indicates the product of black (k), cyan (c), magenta (m) and yellow (y).

Further, Dkc ($\lambda$), Dkm($\lambda$), ..., Dkcmy($\lambda$) [solid density value Di($\lambda$) of the wavelength $\lambda$ of each color i] in the expression (A) individually indicates each a solid overlapping density value of the wavelength $\lambda$ in the target density value for each ink color. For example, Dkc($\lambda$) indicates a density value of the wavelength $\lambda$ in the target density value of each color in the color mixture between black (k) and cyan (c), and, for example, Dkcmy($\lambda$) indicates a density value of each of the wavelengths $\lambda$ in the target density value of each color in the color mixture among black (k), cyan (c), magenta (m), and yellow (y). It is to be noted that $\lambda$ indicates the wavelength of I, R, G, or B. The Di ($\lambda$) value are calculated in advance as described above.

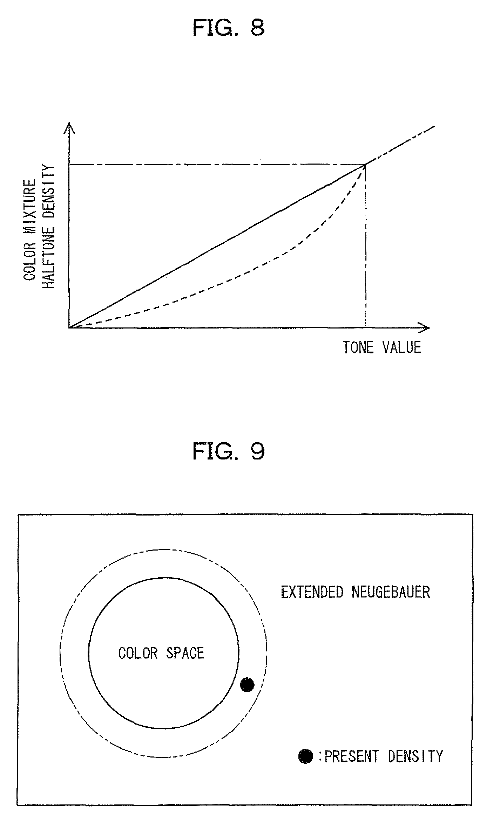

Also in the publicly known Neugebauer expression or the expanded Neugebauer expression, if the Nielsen coefficient n is not suitably set, then the relationship between the tone values and the color mixture halftone density normally exhibits a curve as indicated by a broken line in FIG. 8. It is to be noted that, while the example of FIG. 8 is a section where, as an example, the tone values are fixed to c = m = y = 0 and the relationship between the monochromatic tone values of k and the color mixture halftone density is plotted, such a non-linear relationship as described above appears also in a multi-dimensional space. On the other hand, where the publicly known expanded Neugebauer expression (A) wherein the Nielsen coefficient n is set, for example, to approximately 1,000 is used, the relationship between the tone values and the color mixture halftone density becomes such a linear relationship as indicated by a full line in FIG. 8. Such a linear relationship as just described appears also in a multi-dimensional space.

Accordingly, as seen from a region limit indicated by an alternate long and short dash line in FIG. 9, the relationship between the tone values and the color mixture halftone density in a color space region assumed with respect to the reference density can be easily extended and applied to an outer side region of the color space as indicated by an alternate long and two dashes line in FIG. 9. In particular, the relationship between the tone values and the color mixture halftone density can be applied also to the outside space to the color space region indicated by a full line circle in FIG. 9, and the color space can be substantially extended as indicated by an alternate long and two dashes line circle in FIG. 9 while the relationship between the tone values and the color mixture halftone density is set with respect to the reference density. It is to be noted that a region where the tone value exceeds 100 % is a virtual halftone dot region. In particular, a tone value which is impossible with plate making data from the publicly known expanded Neugebauer expression (A) is defined as a virtual halftone dot tone value.

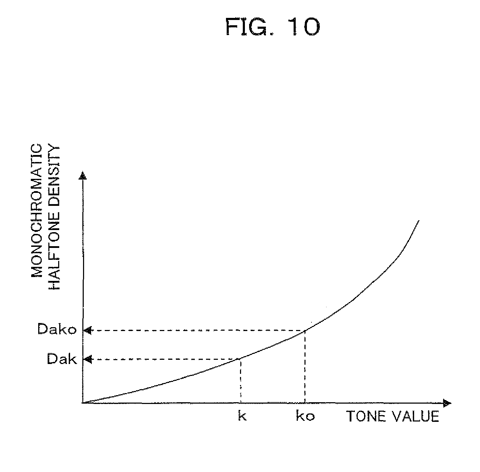

Next, the color conversion section 14 calculates target monochromatic halftone densities of the ink colors corresponding to the target tone values ko, co, mo, yo at step S50A, and calculates actual monochromatic halftone densities of the ink colors corresponding to the actual tone values k, c, m, y at step S50B. Such a map as shown in FIG. 10 is used for the arithmetic operations. FIG. 10 shows an example of a map wherein the monochromatic halftone density measured where the tone values are varied is plotted as a characteristic curve, and the map is produced from data measured in advance (picked up from the values of the database 141). In the example shown in FIG. 10, by collating the target tone values ko and the actual tone values k of black with the map, a target monochromatic halftone density Dako and an actual monochromatic halftone density Dak are calculated from the characteristic curve in the map. As described above, the color conversion section 14 calculates target monochromatic halftone densities Dako, Daco, Damo, Dayo and actual monochromatic halftone densities Dak, Dac, Dam, Day of the ink colors.

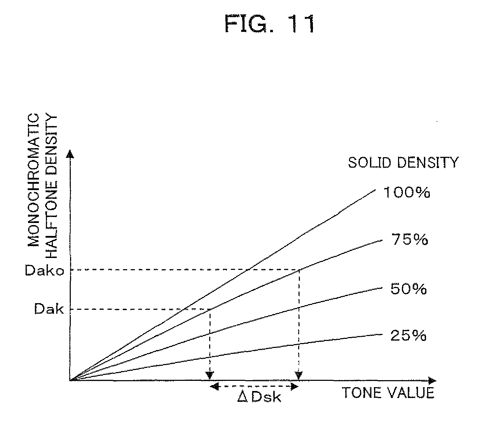

Then, at step S60, the color conversion section 14 calculates solid density differences $\Delta Dsk$, $\Delta Dsc$, $\Delta Dsm$, $\Delta Dsy$ of the ink colors corresponding to differences between the target monochromatic halftone densities Dako, Daco, Damo, Dayo and the actual monochromatic halftone densities Dak, Dac, Dam, Day. It is to be noted that the solid density depends also on the tone values, and, with regard to the monochromatic halftone density, the solid density decreases as the tone values increase. Therefore, the color conversion section 14 performs arithmetic operation using such a map as shown in FIG. 11. FIG. 11 shows an example of a map where the monochromatic halftone density actually measured where the monochromatic solid density is varied is plotted as a characteristic curve for each tone value, and the map is produced from data measured in advance. The color conversion section 14 selects the characteristic curves corresponding to the target tone values ko, co, mo, yo of the ink colors from within the map shown in FIG. 11, and calculates the solid density differences $\Delta Dsk$, $\Delta Dsc$, $\Delta Dsm$, $\Delta Dsy$ by applying the target monochromatic halftone densities Dako, Daco, Damo, Dayo and the actual monochromatic halftone densities Dak, Dac, Dam, Day to the selected characteristic curves. In the example shown in FIG. 11, if the target monochromatic halftone density Dako and the actual monochromatic halftone density Dak are collated with the map where the target tone value of black is 75%, then the solid density difference $\Delta Dsk$ of black is calculated from within the 75% characteristic curve in the map.

The solid density differences $\Delta Dsk$, $\Delta Dsc$, $\Delta Dsm$, $\Delta Dsy$ of the individual ink colors calculated by the color conversion section 14 are inputted to the ink supplying amount arithmetic operation section 15. At step S70, the ink supplying amount arithmetic operation section 15 calculates key opening difference amounts $\Delta Kk$, $\Delta Kc$, $\Delta Km$, $\Delta Ky$ corresponding to the solid density differences $\Delta Dsk$, $\Delta Dsc$, $\Delta Dsm$, $\Delta Dsy$, respectively. The key opening difference amounts $\Delta Kk$, $\Delta Kc$, $\Delta Km$, $\Delta Ky$ are increasing or decreasing amounts from the key openings Kk0, Kc0, Km0, Ky0 at present (key openings Kk, Kc, Km, Ky outputted to the control apparatus 20 of the printing press by the process at step S100 in the preceding operation cycle) of the individual ink keys 7, and the ink supplying amount arithmetic operation section 15 performs the arithmetic operation using the known API function (auto-preset inking function). The API function is a function indicating a relationship between image line ratios A (Ak, Ac, Am, Ay) and the key openings K (Kk, Kc, Km, Ky) for each key zone to establish a reference density. As the image line ratios A, values used at step S04, that is, those values obtained by an averaging process of the tone values among the key zones, may be used. More particularly, the ink supplying amount arithmetic operation section 15 calculates the ratios kd (kd = $\Delta Ds/Ds$) of the solid density differences $\Delta Ds$ ($\Delta Dsk$, $\Delta Dsc$, $\Delta Dsm$, $\Delta Dsy$) to reference densities Ds (Dsk, Dsc, Dsm, Dsy) and the key opening K for obtaining a reference density with respect to each of the image line ratios A using the API function. Then, the ink supplying amount arithmetic operation section 15 calculates the product of the image line ratios A and the key openings K to calculate key opening difference amounts $\Delta K$ ($\Delta K = kd \times K$) for reducing the solid density differences $\Delta Ds$ to zero.

Then, at step S80, the online control section 16 corrects the key opening difference amounts ΔKk, ΔKc, ΔKm, ΔKy calculated by the color conversion section 14 taking the dead times from the printing units 2a, 2b, 2c and 2d to the line sensor type IRGB densitometer 1, reaction times of the ink keys 7 per unit time and the printing speed into consideration. In the correction, a time delay after a key opening signal is inputted until a corresponding ink key 7 moves to change the key opening thereby to change the ink amount to be supplied to the printing sheet and the variation of the ink amount appears as a variation of the reflected light amount on the line sensor type IRGB densitometer 1 is taken into consideration. For such an online feedback control system which involves considerable dead time as described above, for example, PI control with dead time compensation, fuzzy control or robust control is optically applied. The online control section 16 adds the key openings Kk0, Kc0, Km0, Ky0 at present to the key opening difference amounts (online control key opening differences) ΔKk, ΔKc, ΔKm, ΔKy to calculate online control key openings Kk1, Kc1, Km1, Ky1 and inputs the calculated online control key openings Kk1, Kc1, Km1, Ky1 to the key opening limiter arithmetic operation section 17.

At step S90, the key opening limiter arithmetic operation section 17 performs correction of restricting upper limit values to the online control key openings Kk1, Kc1, Km1, Ky1 calculated by the online control section 16. This is a process for restricting the key openings from increasing abnormally particularly arising from an estimated error of the color conversion algorithm (processes at steps SS40, S50 and S60) in a low image line ratio region. Then at step S90, the key opening limiter arithmetic operation section 17 transmits the key openings Kk, Kc, Km, Ky whose upper limit values are restricted as key opening signals to the control apparatus 20 of the printing press.

At step S110, the control apparatus 20 adjusts the ink keys 7 of the printing units 2a, 2b, 2c and 2d based on the key openings Kk, Kc, Km, Ky received from the calculation apparatus 10. Consequently, the ink supplying amounts of the ink colors are controlled so as to conform to a target color tone for each key zone.

It is to be noted that, where the target color mixture halftone densities are changed in such a manner as described above, the changing ratio ra is set (step S06, changing ratio setting step), and the target tone values ko', co', mo', yo' of the ink colors calculated at the target tone values arithmetic operation step of the step S40 are multiplied by the changing ratio ra set at the step S06 to change the target tone values ko, co, mo, yo (step S08, target tone value changing step).

Naturally, if the changing ratio ra is not inputted particularly, then the target tone values ko', co', mo', yo' of the ink colors calculated at step S40 are set as they are to the target tone values ko, co, mo, yo to be used at the next step (or, such logic may be used that the target tone values ko, co, mo, yo are calculated with the changing ratio ra set as a reference value 1).

If the changing ratio ra is set in this manner, then the target tone values ko, co, mo, yo changed at step S08 are reflected on the arithmetic operation of the target monochromatic halftone densities Dako, Daco, Damo, Dayo of the ink colors at step S50A, arithmetic operation of the solid density differences ΔDsk, ΔDsc, ΔDsm, ΔDsy at step S60, arithmetic operation of the key opening difference amounts ΔKk, ΔKc, ΔKm, ΔKy at step S70 and arithmetic operation of the online control key openings Kk1, Kc1, Km1, Ky1 at step S80, and the color tone is controlled to the changed target density.

Since the color tone controlling method and apparatus according to the present embodiment are configured in such a manner as described above, the color tone control can be carried out immediately after build up of the printing press (after an OK sheet). Then, noticed pixel regions (noticed points) are individually set and the color mixture halftone density of the noticed points is set as the target color mixture halftone densities Io, Ro, Go, Bo, and the actual color mixture halftone densities I, R, G, B of the corresponding noticed points on a pressrun sheet are measured and used for feedback control. Consequently, also where plate making data such as 1 bit-Tiff or CIP4 data are not available, the color tone control can be performed for the specific noticed points of the picture.

Further, since measured values are not averaged over the entire key zone, even if the line ratio of the picture in the key zone is low (for example, even if the key zone includes a one-point small picture therein), the measurement error of the line sensor type IRGB densitometer 1 is small and the color tone control can be performed stably. Particularly, if a pixel having the highest density sensitivity is calculated and automatically extracted for each ink color and set as a noticed pixel region, then the color tone control can be performed more stably where the line ratio of the picture in the key zone is low. In particular, for example, the density sensitivity Hdc of cyan can be defined by "$Hdc = R^n/(R + G + B + I)$" using the measured density data (R, G, B, I) (n: an exponentiation of the autocorrelation and, for example, approximately 1.3), and the pixel having the highest value of the density sensitivity Hdc is calculated as the noticed point of cyan. Similarly, also with regard to the other ink colors, a pixel having the highest density sensitivity is calculated and the calculated pixel is set as the noticed point.

Then, if the value of the changing ratio (= changing coefficient) ra for the target density (target tone values) is suitably set as occasion demands to change the target tone values, then printing of a color tone more conforming to the request from the customer can be achieved and printing having a higher commercial value can be implemented by the color tone adjustment.

Particularly, where a configuration which directly changes the target color mixture halftone density is adopted, if the target color mixture halftone density of a wavelength having the highest sensitivity to a certain ink color is changed, then this has an influence on the density of the other ink colors. However, since the target tone values of the monochromes of the individual inks are changed to change the target density (target color mixture halftone density), even if the target density of a certain ink color is changed, the influence on the density of the other ink colors can be reduced. Therefore, the density changing can be performed suitably without giving rise to disorder.

Further, when the actual tone values are calculated from the actual color mixture halftone density and when the target tone values are calculated from the target color mixture halftone density, the publicly known expanded Neugebauer expression (A) is used wherein the solid density values $Di(\lambda)$ of each of the wavelengths $\lambda$ of the colors of I (Infrared radiation), R (Red), G (Green), B (Blue) are acquired in advance as a corresponding relationship between the tone values and the color mixture halftone density and the Yule-Nielsen coefficient is set to such a predetermined value n that the relationship between the tone values and the color mixture halftone density value becomes substantially linear. Therefore, the corresponding relationship in the color space can be easily extended to the outside of the color space.

In particular, in the case of the publicly known expansion Neugebauer expression (A) wherein the Yule-Nielsen coefficient n is set to such a value that the relationship between the tone values and the color mixture halftone density value becomes substantially linear, the relationship between the tone values and the color mixture halftone density becomes such a linear relationship as indicated by a solid line in FIG. 9. Therefore, also in a case wherein the density (density at present) of the actual printed matter comes out of the region within the color space (solid line circle) with respect to the standard density as indicated by a black round mark in FIG. 8, the relationship between the tone values and the color mixture halftone density in the color space region estimated with respect to the standard density can be easily extended and used.

Therefore, conversion from a color mixture halftone density into tone values can be performed with certainty also with regard to the outside region of the color space defined with respect to the standard density (in this instance, since the tone values exceed 100 %, they become virtual tone values). For example, even if the changing ratio is set to the increasing side of the target tone values and the target color mixture halftone density corresponding to the target tone values changed in response to the changing ratio is set to a density exceeding the color space defined with respect to the standard density. As a result, even if the density upon actual color mixture halftone density printing exceeds the color space defined with respect to the standard density, the actual tone values can be calculated with certainty and the color tone control corresponding to the changing ratio can be performed.

(D) Second Embodiment of Target Color Mixture Halftone Density change

The target color mixture halftone density change can be performed also by changing the dot gain correction coefficient.

In particular, using the following expression (D), correction is performed with dot gain correction coefficients kc, km, ky, kk to calculate color dot gain amounts (post-correction values) DGc to DGk when the monochromatic tone values of the plate data are 50%.

$$DGc = kc \times DGc'$$

$$DGm = km \times DGm'$$

$$DGy = ky \times DGy'$$

$$DGk = kk \times DGk' \hspace{3cm} (D)$$

where kc, km, ky, kk are dot gain correction coefficients and are normally equal to 1.

It is to be noted that DGc', DGm', DGy', DGk' are calculated using values of the monochrome 50 % halftone density D50 and the monochrome 100 % solid density D100 obtained by printing a color scale of the Japan Color (ISO12642) or the like with a reference density.

$$DG = (1 - 10^{-D50})/(1 - 10^{-D100}) - 0.5$$

Then, the plate making tone value data c' to k' can be dot-gain corrected in accordance with the following expressions (E) to obtain corrected tone value data k, c, m, y.

$$c = -DGc/0.25 \times (c' - 0.5)^2 + DGc + c'$$

$$m = -DGm/0.25 \times (m' - 0.5)^2 + DGm + m'$$

$$y = -DGy/0.25 \times (y' - 0.5)^2 + DGy + y'$$

$$k = -DGk/0.25 \times (k' - 0.5)^2 + DGk + k' \qquad (E)$$

where

c ~ k: dot-gain corrected dot value data
c' ~ k' : plate making dot value data

The target density can be changed by changing such a dot gain correction coefficient. For example, where a roller, a bracket or the like of the printing machine is deteriorated to increase the dot gain, if the dot gain coefficient is increased higher than 1, then calculation of accurate target values is permitted.

In the following, picture color tone control of a printing press which uses such pre-printing confirmation technique according to the target color mixture halftone density change described above is described.

(E) Second Embodiment of the Picture Color Tone Controlling Method and Apparatus for a Printing Press

A second embodiment of the picture color tone control for a printing press of the present invention is described. In the present embodiment, the publicly known Neugebauer expression (B) which is dot gain corrected is used in place of the conversion table in the embodiments described above.

In particular, in place of the conversion table in the first embodiment produced based on the corresponding relationship obtained in advance by printing the color scale of the Japan Color (ISO12642) or the like under the standard density, the solid density values $Di(\lambda)$ of each of the wavelengths $\lambda$ of the colors of I (Infrared radiation), R (Red), G (Green), B (Blue) are acquired from data obtained in advance by printing the color scale of the Japan Color (ISO12642) or the like under the standard density and for which dot gain correction is performed, and the publicly known Neugebauer expression (B) for which dot gain correction is defined in such a manner as given below and the expression (B) is used to determine the color mixture halftone density.

[expression 4]

$$10^{-Dao(\lambda)} = (1 - k)(1 - c)(1 - m)(1 - y)$$

$$+ k(1 - c)(1 - m)(1 - y)10^{-Dk(\lambda)}$$

$$+ c(1 - k)(1 - m)(1 - y)10^{-Dc(\lambda)}$$

$$+ m(1 - k)(1 - c)(1 - y)10^{-Dm(\lambda)}$$

$$+ y(1 - k)(1 - c)(1 - m)10^{-Dy(\lambda)} + kc(1 - m)(1 - y)10^{-Dkc(\lambda)}$$

$$+ km(1 - c)(1 - y)10^{-Dkm(\lambda)} + ky(1 - k)(1 - y)10^{-Dky(\lambda)}$$

$$+ cm(1 - k)(1 - y)10^{-Dcm(\lambda)} + cy(1 - k)(1 - m)10^{-Dcy(\lambda)}$$

$$+ my(1 - k)(1 - c)10^{-Dmy(\lambda)} + kcm(1 - y)10^{-Dkcm(\lambda)}$$

$$+ kcy(1 - m)10^{-Dkcy(\lambda)} + kmy(1 - c)10^{-Dkmy(\lambda)}$$

$$+ cmy(1 - k)10^{-Dcmy(\lambda)} + kcmy10^{-Dkcmy(\lambda)}$$

$$\cdots \quad (B)$$

where

Dao($\lambda$): target color mixture halftone density value;
k, c, m, y: tone value data for which dot gain correction is performed;
Di($\lambda$): solid density value of wavelength $\lambda$ of each color i (extracted from color scale data);
i: one of Cyan, Magenta, Yellow, Black and color mixture of them;
for example, Dc: solid density value of Cyan, Dm: solid density value of Magenta, Dy: solid density value of Yellow;
Dk: solid density value of Black;
Dcm: two-color overlapping solid density value of Cyan and Magenta, Dcy: two-color over lapping solid density value of Cyan and Yellow, Dmy: two-color overlapping solid density value of Magenta and Yellow;
Dkc: two-color overlapping solid density value of Cyan and Black, Dkm: two-color overlapping solid density value of Magenta and Black, Dky: two-color overlapping solid density value of Yellow and Black;
Dcmy: three-color overlapping solid density value of Cyan, Magenta and Yellow;
Dkcm: three-color overlapping solid density value of Cyan, Magenta and Black;
Dkcy: three-color overlapping solid density value of Cyan, Yellow and Black;
Dkmy: three-color overlapping solid density value of Magenta, Yellow and Black;
Dcmyk: four-color overlapping solid density value of Cyan, Magenta, Yellow and Black; and
$\lambda$: wavelength region of each of R, G, B, I, for example, R = 650 nm, G = 550 nm, B = 450 nm, and I = 800 nm.

It is to be noted that, in the expression above, the Nielsen coefficient n in the publicly known expanded Neugebauer expression (A) described above is removed.
Also by this configuration, effects similar to those in the first embodiment can be achieved.
It is to be noted that, as regards the dot gain correction of the publicly known Neugebauer expression (B), the tone value data k, c, m, y in the expression (B) are dot gain corrected in the following manner.
First, monochromatic halftone densities Dc50 to Dk50 when the tone values of the plate making data are 50% and monochromatic solid densities (monochromatic solid halftone densities) Dc100 to Dk100 when the tone values of the plate making data are solid (100%) are obtained by extraction from the color scale density value data. Then, color dot gain amounts (values before correction) DGc' to DGk' when the monochromatic tone values of the plate making data are 50% are calculated using the following expression (C) based on the values obtained as above.

$$DGc' = (1 - 10^{-Dc50})/(1 - 10^{-Dc100}) - 0.5$$

$$DGm' = (1 - 10^{-Dm50})/(1 - 10^{-Dm100}) - 0.5$$

$$DGy' = (1 - 10^{-Dy50})/(1 - 10^{-Dy100}) - 0.5$$

$$DGk' = (1 - 10^{-Dk50})/(1 - 10^{-Dk100}) - 0.5 \quad (C)$$

where DGc to DGk: color dot gain amount when the monochromatic tone values of the plate making data are 50 %, Dc50 to Dk50: monochromatic halftone density when the tone values of the plate making data are 50% (extracted from the color scale density value data); and Dc100 to Dk100: monochromatic solid density when the tone values of the plate making data are solid (100%) (extracted from the color scale density value data).

Then, using the following expression (D), correction is performed with dot gain correction coefficients kc, km, ky, kk to calculate color dot gain amounts (values after correction) DGc to DGk when the monochromatic tone values of the plate making data are 50%.

Then, plate making tone value data c' to k' are dot gain corrected using the expression (E) given hereinabove to obtain corrected tone value data k, c, m, y.

(F) Third Embodiment of the Picture Color Tone Controlling Method and Apparatus for a Printing Press

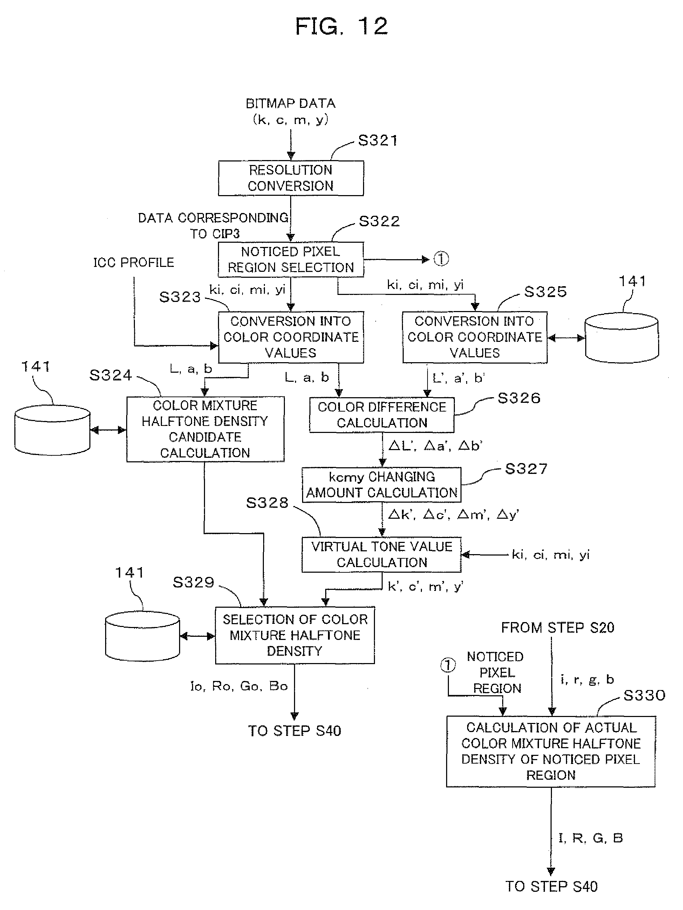

A third embodiment of the present invention is described with reference to FIG. 12. The present embodiment is characterized in the setting method of the target density (target color mixture halftone density) of a noticed pixel region (noticed point). A flow chart shown in FIG. 12 illustrates the substance of processing (substance of a process corresponding to that at step S04 in FIG. 7) in the present embodiment in detail. Since the substance of the other processes for picture color tone control is such as described hereinabove with reference to FIG. 7, description of the substance is omitted here.

It is assumed that, also in the present embodiment, printing data of page information for a newspaper transmitted in the form of bitmap data from the head office of a newspaper company to a printing factory are inputted similarly as in the first embodiment. However, in the present embodiment, as a difference from the second embodiment, also an ICC profile of an inputting apparatus by which color information of the page has been produced is transmitted in addition to the bitmap data of the page information. At step S321, the bitmap data are converted into low-resolution data corresponding to CIP4 data according to the format of the printing press, and at step S322, a noticed point corresponding to each ink color is set for each ink supplying unit width. Since the substance of the processes at steps S321 and S322 are similar to that at steps S311 and S312 according to the second embodiment, detailed description thereof is omitted.

At step S323, the ICC profile received from the head office of the newspaper company is used to convert the tone values ki, ci, mi, yi of the noticed points into a color coordinate value L, a, b. Then at step S324, a conversion table stored in the database 141 is used to convert the color coordinate value L, a, b determined at step S324 into a color mixture halftone density. However, since the color mixture halftone density is four-dimensional information while the color coordinate value is three-dimensional information, the color mixture halftone density corresponding to the color coordinate value is not determined uniquely. In order to determine the color mixture halftone density uniquely, some additional information is required. However, from the ICC profile, only three-dimensional information of the color coordinate value can be obtained.

Therefore, in the present embodiment, the tone value data of the printing picture, that is, the tone values ki, ci, mi, yi corresponding to the color coordinate value L, a, b, are utilized to select, in development from such three-dimensional information into four-dimensional information, the most appropriate pieces of four-dimensional information from among a large number of pieces of the four-dimensional information which are regarded as candidates.

First at step S325, the conversion table stored in the database 141 is used to convert the tone values ki, ci, mi, yi of the noticed points into color coordinate values L', a', b'. At step S326, color differences $\Delta L'$, $\Delta a'$, $\Delta b'$ between the color coordinate values L, a, b determined at step S323 and the color coordinate values L', a', b' determined at step S325 are arithmetically operated. Then at step S327, variation amounts $\Delta k'$, $\Delta c'$, $\Delta m'$, $\Delta y'$ of the tone values corresponding to the color differences $\Delta y'$, $\Delta a'$, $\Delta y'$, respectively, are arithmetically operated. The variation amounts of the tone values can be approximated by the following expressions using the variation amounts of the color coordinate values. It is to be noted that a and b in the following expressions are linear approximation coefficients.

$$\Delta c' = a11 \times \Delta L' + a12 \times \Delta a' + a13 \times \Delta b' + bc \quad \cdots \quad (1)$$

$$\Delta m' = a21 \times \Delta L' + a22 \times \Delta a' + a23 \times \Delta b' + bm \quad \cdots \quad (2)$$

$$\Delta y' = a31 \times \Delta L' + a32 \times \Delta a' + a33 \times \Delta b' + by \quad \cdots \quad (3)$$

$$\Delta k' = a41 \times \Delta L' + a42 \times \Delta a' + a43 \times \Delta b' + bk \quad \cdots \quad (4)$$

At step S328, the variation amounts $\Delta k'$, $\Delta c'$, $\Delta m'$, $\Delta y'$ determined at step S327 are added to the tone values ki, ci, mi, yi of the noticed points, and the resulting values are set as virtual tone values k' , c', m', y' , respectively. At step S329, the virtual tone values k' , c', m', y' are applied to the conversion table recorded in the database 141 to select, from among the color mixture halftone density candidates determined at step S324, those which correspond most to the virtual tone values k' , c', m', y'. The selected color mixture halftone densities are set as the target color mixture halftone densities Io, Ro, Co, Bo and are used in the processes at steps beginning with step S40 together with the actual color mixture halftone densities I, R, G, B of the noticed points arithmetically operated at step S330.

According to the present method, since an ICC profile obtained from a printing requesting source or the like can be used to control the color tone, the color tone can be adjusted accurately and easily to a color tone desired by the printing requesting source or the like when compared with alternative color adjustment which is performed through comparison with a proof-sheet as is performed conventionally. Accordingly, with the present method, the incidence of paper loss before an OK sheet is obtained can be reduced significantly.

(D) Others

While the embodiments of the present invention are described above, the embodiments of the present invention are not limited to those described above.

For example, in the embodiment of the pre-printing confirmation of the picture color tone of a printing press illustrated in FIG. 1, the permissible range of the color tone (color shade) is set to two stages of the first permissible range and first threshold value and the second permissible range and second threshold value, and where the difference in color shade is great (decision 3), this is coped with correcting the printing plate itself, but where the color shade is slightly different (decision 2), this is coped with correcting the target values in the color tone control. However, it is possible to set the permissible range of the color shade to only one stage (to only the first permissible range and first threshold value or to a mere permissible range and a mere threshold value) such that one of correction of the plate making itself and efficiently coping with failure in color shade may be adopted.

Further, as regards the color tone control, while, for example, in the embodiments described hereinabove, an IRGB densitometer of the line sensor type is used, an IRGB densitometer of the spot type may be used to scan a printed sheet two-dimensionally.

Industrial Applicability of the Invention

With the present invention, since color printing can be carried out in a desired color tone from the beginning of printing, a so-called trial print run becomes unnecessary, and therefore, incidence of paper loss can be suppressed and the print quality can be improved while the printing cost is suppressed. Therefore, the present invention can be applied efficiently to various kinds of printing, and particularly in regard to suppression of the printing cost, the present invention achieves a high effect where the printing amount is small. Meanwhile, in regard to suppression of the number of occurrences of paper loss, the present invention achieves a high effect where the printing speed is high.

**Claims**

1. Apre-printing confirmation method of a picture color tone for a printing press, comprising:

a device profile acquisition step of a printing press of producing or acquiring a relationship between tone value data k, c, m and y and color coordinates (L*a*b*) under a reference ink density as a device profile of a printing press to be used for printing;

a device profile acquisition step of a simulation printing tool of producing or acquiring a relationship between simulation printing tool color mixture halftone densities R, G and B or simulation printing tool tone values k', c', m' and y' and color coordinates (L*a*b*) as a device profile of a simulation printing tool;

a plate making data acquisition step (B10) of acquiring plate making data to be used for printing;

a first conversion step (B20) of converting tone value data k, c, m and y of the acquired plate making data into color coordinates (L*a*b*) using the device profile of the printing press;

a second conversion step (B30) of converting the color coordinates (L*a*b*) into simulation printing tool color mixture halftone densities R, G and B or simulation printing tool tone values k', c', m' and y' using the device profile of the simulation printing that the color coordinates (L*a*b*) are obtained by the first conversion step;

an output step (B40) of outputting a picture according to the plate making data to the simulation printing tool in accordance with the simulation printing tool color mixture halftone densities R, G and B or the converted simulation printing tool tone values k', c', m' and y' obtained by the conversion, and

a decision step (B50) of deciding whether or not a color shade of an output of the simulation printing tool is within a permissible range.

2. The pre-printing confirmation method of a picture color tone for a printing press as set forth in claim 1, wherein, at the decision step (B50), the decision of the color shade is performed for each ink supplying region of the printing press.

3. The pre-printing confirmation method of a picture color tone for a printing press as set forth in claim 1 or 2, wherein the device profile of the printing press is produced based on a corresponding relationship obtained by printing a color scale of the Japan Color (ISO12642) or the like in advance with the reference density by the printing press.

4. The pre-printing confirmation method of a picture color tone for a printing press as set forth in any one of claims 1 to 3, wherein, if it is decided by the confirmation of the color shade at the decision step (B50) that the color shade is within a first permissible range, then plate making is performed using a reference plate making curve, but, if it is decided by the confirmation of the color shade at the decision step (B50) that the color shade is not within the first permissible range, then the plate making curve is corrected using the device profile of the printing press so that the plate making curve becomes the plate making curve of the printing press and then the plate making data is corrected using the corrected plate making curve of the printing press, whereafter the first conversion step, second conversion step and decision step are performed again.

5. The pre-printing confirmation method of a picture color tone for a printing press as set forth in claim 4, wherein the printing press performs setting a target color mixture halftone density which is a target value for a color mixture halftone density of a printed picture, and, based on a detection value of a density detection sensor (1) which detects a density, picture color tone control such that an actual color development density of a printed picture approaches the target color mixture halftone density, and acquires a relationship between color mixture halftone densities I, R, G and B and color coordinates (L*a*b*) as a device profile of the density detection sensor (1) in advance;

if it is decided based on the confirmation of the color shade at the decision step (B50) that the color shade is within a second permissible range set as a range severer than the first permissible range within the first permissible range, then reference target densities $I_0$, $R_0$, $G_0$ and $B_0$ corresponding to the plate making data are used as they are as the target color mixture halftone density, but if it is decided that the color shade is not within the second permissible range, the target color mixture halftone density is corrected so that the color shade falls within the second permissible range with respect to the reference target density; and

the target color mixture halftone densities $I_0'$, $R_0'$, $G_0'$ and $B_0'$ obtained by the correction are converted into color coordinates (L*a*b*) using the device profile of the density detection sensor (1) and then the second conversion step (B30) and the decision step (B50) are performed again.

6. The pre-printing confirmation method of a picture color tone for a printing press as set forth in any one of claims 1 to 3, wherein the printing press performs setting a target color mixture halftone density which is a target value for a color mixture halftone density of a printed picture, and, based on a detection value of a density detection sensor (1) which detects a density, picture color tone control such that an actual color development density of a printed picture approaches the target color mixture halftone density, and acquires a relationship between color mixture halftone densities I, R, G and B and color coordinates (L*a*b*) as a device profile of the density detection sensor (1) in advance;

if it is decided based on the confirmation of the color shade at the decision step (B50) that the color shade is within a permissible range, then reference target densities $I_0$, $R_0$, $G_0$ and $B_0$ corresponding to the plate making data are used as they are as the target color mixture halftone density, but if it is decided that the color shade is not within the permissible range, then the target color mixture halftone density is corrected so that the color shade falls within the permissible range with respect to the reference target density; and

the target color mixture halftone densities $I_0'$, $R_0'$, $G_0'$ and $B_0'$ obtained by the correction are converted into color coordinates (L*a*b*) using the device profile of the density detection sensor (1) and then the second conversion step (B30) and the decision step (B50) are performed again.

7. The pre-printing confirmation method of a picture color tone for a printing press as set forth in claim 5 or 6, wherein the correction process of the target color mixture halftone density includes:

a changing ratio setting step (S06) of setting a changing ratio regarding the target tone value of each ink color or the target color mixture halftone density corresponding to the target tone value; and

a target value changing step (S08) of multiplying the reference target density or the target tone value corresponding to the reference target density by each changing ratio calculated at the changing ratio setting step to change the reference target density or the target tone value.

8. The pre-printing confirmation method of a picture color tone for a printing press as set forth in any one of claims 1 to 7, wherein the device profile acquisition step of the printing press, device profile acquisition step of the simulation printing tool, plate making data acquisition step (B10), first conversion step (B20), second conversion step (B30) and output step (B40) are executed by a controlling apparatus of the simulation printing tool.

9. A plate making method, wherein, if it is decided based on the confirmation of the color shade using the pre-printing confirmation method of a picture color tone as set forth in claim 4 that the color shade is within the first permissible range, then plate making is performed using the reference plate making curve, but if it is decided that the color shade is not within the first permissible range, then the plate making curve is corrected so that the plate making curve becomes the plate making curve of the printing press using the device profile of the printing press and then plate making is performed using the corrected plate making curve of the printing press.

10. A picture color tone controlling method for a printing press to be performed, after the confirmation of a color shade using the pre-printing confirmation method of a picture color tone as set forth in any one of claims 1 to 8, based on the suitably corrected target color mixture halftone density, comprising:

a noticed pixel region acquisition step (S02) of acquiring a noticed pixel region to be noticed as a target of color tone control from within the printing picture;

a target color mixture halftone density acquisition step (S04) of acquiring the target color mixture halftone density regarding the noticed pixel region selected at the noticed pixel region acquisition step (S02);

an actual color mixture halftone density measurement step (S10) of measuring an actual color mixture halftone density of each noticed pixel region of pressrun sheet obtained by pressrun using an IRGB densitometer;

a target tone value calculation step (S40A) of calculating a target tone value of each ink color corresponding to the target color mixture halftone density based on a corresponding relationship between tone values and color mixture halftone densities set in advance;

an actual tone value calculation step (S40B) of calculating an actual tone value of each ink color corresponding to the actual color mixture halftone density based on the corresponding relationship between tone values and color mixture halftone densities;

a target monochromatic halftone density calculation step (S5A) of calculating a target monochromatic halftone density corresponding to the target tone value based on a corresponding relationship between tone values and monochromatic halftone densities set in advance;

an actual monochromatic halftone density calculation step (S50B) of calculating an actual monochromatic halftone density corresponding to the actual tone value based on the corresponding relationship between tone values and monochromatic halftone densities;

a solid density difference calculation step (S60) of calculating a solid density difference corresponding to a difference between the target monochromatic halftone density and the actual monochromatic halftone density under the target tone value based on a corresponding relationship among tone values, monochromatic halftone densities and solid densities set in advance; and

an ink supplying amount adjustment step (S100) of adjusting an ink supplying amount for each ink supplying width of an ink supplying amount based on the solid density difference.

11. The picture color tone controlling method for a printing press as set forth in claim 10, wherein, as the corresponding relationship between the tone values and the color mixture halftone densities to be used at the target tone value calculation step and the actual tone value calculation step, solid density values Di($\lambda$) for each of the wavelengths $\lambda$ of colors of I (infrared light), R (Red), G (Green), and B (Blue) are acquired in advance and a publicly known extended Neugebauer expression (A) is produced in advance wherein a Yule-Nielsen coefficient n is set to such a value that the tone values and the color mixture halftone density value have a substantially linear relationship to each other, and the target tone values and the actual tone values are determined us ing the publicly known extended Neugebauer expression (A):

[Expression 1]

$$10^{-Da(\lambda)/n} = (1 - k)(1 - c)(1 - m)(1 - y)$$
$$+ k(1 - c)(1 - m)(1 - y)10^{-Dk(\lambda)/n}$$
$$+ c(1 - k)(1 - m)(1 - y)10^{-Dc(\lambda)/n}$$
$$+ m(1 - k)(1 - c)(1 - y)10^{-Dm(\lambda)/n}$$
$$+ y(1 - k)(1 - c)(1 - m)10^{-Dy(\lambda)/n}$$
$$+ kc(1 - m)(1 - y)10^{-Dkc(\lambda)/n}$$
$$+ km(1 - c)(1 - y)10^{-Dkm(\lambda)/n} + ky(1 - k)(1 - y)10^{-Dky(\lambda)/n}$$
$$+ cm(1 - k)(1 - y)10^{-Dcm(\lambda)/n} + cy(1 - k)(1 - m)10^{-Dcy(\lambda)/n}$$
$$+ my(1 - k)(1 - c)10^{-Dmy(\lambda)/n} + kcm(1 - y)10^{-Dkcm(\lambda)/n}$$

$$+ kcy(1 - m)10^{-Dkcy(\lambda)/n} + kmy(1 - c)10^{-Dkmy(\lambda)/n}$$
$$+ cmy(1 - k)10^{-Dcmy(\lambda)/n} + kcmy10^{-Dkcmy(\lambda)/n}$$

$$\cdots \quad (A)$$

where

Da($\lambda$): color mixture halftone density value;
k, c, m, y: tone values of corresponding inks;
Di($\lambda$): solid density value of wavelength $\lambda$ of each color i (extracted from color scale data);
i: one of Cyan, Magenta, Yellow, Black and color mixture of them;
for example, Dc: solid density value of Cyan, Dm: solid density value of Magenta, Dy: solid density value of Yellow;
Dk: solid density value of Black;
Dcm: two-color overlapping solid density value of Cyan and Magenta, Dcy: two-color overlapping soliddensity value of Cyan and Yellow, Dmy: two-color overlapping solid density value of Magenta and Yellow;
Dkc: two-color overlapping solid density value of Cyan and Black, Dkm: two-color overlapping solid density value of Magenta and Black, Dky: two-color overlapping solid density value of Yellow and Black;
Dcmy: three-color overlapping solid density value of Cyan, Magenta and Yellow;
Dkcm: three-color overlapping solid density value of Cyan, Magenta and Black;
Dkcy: three-color overlapping solid density value of Cyan, Yellow and Black;
Dkmy: three-color overlapping solid density value of Magenta, Yellow and Black;
Dcmyk: four-color overlapping solid density value of Cyan, Magenta, Yellow and Black
$\lambda$ : wavelength region of each of R, G, B, I, for example, R = 650 nm, G = 550 nm, B = 450 nm, I = 800 nm; and
n: coefficient of Yule-Nielsen.

**12.** The picture color tone controlling method for a printing press as set forth in claim 11, wherein the solid density value Di($\lambda$) for each of the wavelengths $\lambda$ of the colors of I (infrared light), R (Red), G (Green) and B (Blue) in the publicly known extended Neugebauer expression (A) is acquired from data obtained in advance by printing a color scale of the Japan Color (ISO12642) or the like under the standard density.

**13.** The picture color tone controlling method for a printing press as set forth in claim 11 or 12, wherein the target color mixture halftone density setting step (S04) includes
a data acquisition step of acquiring tone values data of kcmy of a printing object picture from the outside, and
a color mixture halftone density conversion step of converting the tone values of the noticed pixel regions acquired at the data acquisition step into color mixture halftone densities based on the corresponding relationship between the tone values and the color mixture halftone densities set in advance,
the color mixture halftone densities of the noticed pixel regions converted at the color mixture halftone density conversion step being set as the target color mixture halftone densities.

**14.** The picture color tone controlling method for a printing press as set forth in claim 13, wherein the corresponding relationship between the tone values and the color mixture halftone densities used at the color mixture halftone density conversion step is defined as a conversion table produced based on a corresponding relationship obtained in advance by printing a color scale of the Japan Color (ISO12642) or the like under the standard density or the publicly known Neugebauer expression (B) wherein solid density values Di($\lambda$) of each of the wavelengths $\lambda$ of the colors of I (infrared light), R (Red), G (Green), and B (Blue) are obtained in advance by printing a color scale of the Japan Color (ISO12642) or the like under the standard density and then dot gain corrected, and a color mixture halftone density is determined using the conversion table or the publicly known Neugebauer expression (B) in the dot gain corrected state:

[Expression 2]

$$
\begin{aligned}
10^{-Dao(\lambda)} = {} & (1-k)(1-c)(1-m)(1-y) \\
& + k(1-c)(1-m)(1-y)10^{-Dk(\lambda)} \\
& + c(1-k)(1-m)(1-y)10^{-Dc(\lambda)} \\
& + m(1-k)(1-c)(1-y)10^{-Dm(\lambda)} \\
& + y(1-k)(1-c)(1-m)10^{-Dy(\lambda)} + kc(1-m)(1-y)10^{-Dkc(\lambda)} \\
& + km(1-c)(1-y)10^{-Dkm(\lambda)} + ky(1-k)(1-y)10^{-Dky(\lambda)} \\
& + cm(1-k)(1-y)10^{-Dcm(\lambda)} + cy(1-k)(1-m)10^{-Dcy(\lambda)} \\
& + my(1-k)(1-c)10^{-Dmy(\lambda)} + kcm(1-y)10^{-Dkcm(\lambda)} \\
& + kcy(1-m)10^{-Dkcy(\lambda)} + kmy(1-c)10^{-Dkmy(\lambda)} \\
& + cmy(1-k)10^{-Dcmy(\lambda)} + kcmy10^{-Dkcmy(\lambda)}
\end{aligned}
$$

$$\cdots \quad (B)$$

where

Dao($\lambda$): target color mixture halftone density value;
k, c, m, y: tone values data in a dot gain corrected state;
Di ($\lambda$) : solid density value of wavelength $\lambda$ of each color i (extracted from color scale data);
i: one of Cyan, Magenta, Yellow, Black and color mixture of them;
for example, Dc: solid density value of Cyan, Dm: solid density value of Magenta, Dy: solid density value of Yellow;
Dk: solid density value of Black;

Dcm: two-color overlapping solid density value of Cyan and Magenta, Dcy: two-color overlapping solid density value of Cyan and Yellow, Dmy: two-color overlapping solid density value of Magenta and Yellow;

Dkc: two-color overlapping solid density value of Cyan and Black, Dkm: two-color overlapping solid density value of Magenta and Black, Dky: two-color overlapping solid density value of Yellow and Black;

Dcmy: three-color overlapping solid density value of Cyan, Magenta and Yellow;

Dkcm: three-color overlapping solid density value of Cyan, Magenta and Black;

Dkcy: three-color overlapping solid density value of Cyan, Yellow and Black;

Dkmy: three-color overlapping solid density value of Magenta, Yellow and Black;

Dcmyk: four-color overlapping solid density value of Cyan, Magenta, Yellow and Black; and

λ: wavelength region of each of R,G,B, I, for example, R = 650 nm, G = 550 nm, B = 450 nm, and I = 800 nm.

**15.** The picture color tone controlling method for a printing press as set forth in any one of claims 10 to 14, wherein the target color mixture halftone density setting step (S04) includes:

a data acquisition step of acquiring kcmy tone values data and an ICC profile of a printing object picture from the outside; and

a color mixture halftone density conversion step of converting the tone values of the noticed pixel region into a color mixture halftone density using the ICC profile and a device profile of the IRGB densitometer;

the color mixture halftone density of the noticed pixel region converted at the color mixture halftone density conversion step being set as the target color mixture halftone density.

**16.** The picture color tone controlling method for a printing press as set forth in claim 15, wherein the device profile is a conversion table which defines a corresponding relationship among tone values, color mixture halftone densities and color coordinate values, and

the color mixture halftone density conversion step includes:

a first color coordinate value conversion step of converting the tone values of the noticed pixel into a color coordinate value using the ICC profile;

a color mixture halftone density candidate selection step of selecting a plurality of color mixture halftone density candidates corresponding to the color coordinate value of the noticed pixel using the conversion table;

a second color coordinate value conversion step of converting the tone values of the noticed pixel into another color coordinate value using the conversion table;

a color difference calculation step of calculating a color difference between the two color coordinate values obtained at the first and second color coordinate value conversion steps;

a tone value variation amount calculation step of calculating a variation amount of the tone values corresponding to the color difference calculated at the color difference calculation step;

a virtual tone value calculation step of arithmetically operating virtual tone values by adding the variation amount arithmetically operated at the tone value variation amount calculation step to the tone values of the noticed pixel region; and

a selection step of referring to the conversion table to select a color mixture halftone density candidate which most corresponds to the virtual tone values arithmetically operated at the virtual tone value calculation step from among the plural color mixture halftone density candidates selected at the color mixture halftone density candidate selection step;

the selected color mixture halftone density candidate being set as the color mixture halftone density of the noticed pixel region at the color mixture halftone density conversion step.

**17.** The picture color tone controlling method for a printing press as set forth in claim 15 or 16, wherein, at the data acquisition step, bitmap data of the printing object picture are acquired first, and then, data produced by converting the bitmap data into low-resolution data corresponding to CIP4 data is used as the kcmy halftone dot area data.

**18.** The printing color tone controlling method for a printing press as set forth in any one of claims 10 to 17, wherein, at the noticed pixel region selection step, a region in which the autocorrelation is high regarding each ink color is selected in a unit of a sensor pixel of the IRGB densitometer, and the selected region is set as the noticed pixel region for each ink color.

**19.** The Picture color tone controlling method for a printing press as set forth in claim 18, wherein the region in which the autocorrelation is high at the noticed pixel region selection step is all pixel groups whose autocorrelation is higher than a condition set in advance for each ink color, and,

at the noticed pixel setting step, the pixel group is automatically extracted using a computer.

20. A pre-printing confirmation apparatus of a picture color tone for a printing press, comprising:

a first conversion section for converting tone value data k, c, m and y of plate making data into color coordinates (L*a*b*) using a device profile of a printing press to be used for printing;

a simulation printing tool;

a second conversion section for converting the color coordinates (L*a*b*) obtained by the conversion into simulation printing tool color mixture halftone densities R, G and B (monitor) or simulation printing tool tone values k', c', m' and y' (printer) using a device profile of said simulation printing tool; and

a decision section for comparing a color shade of an output obtained by outputting a picture according to the plate making data to said simulation printing tool in accordance with the simulation printing tool color mixture halftone densities R, G and B (monitor) or simulation printing tool tone values k', c', m' and y' (printer) obtained by the conversion with a color shade of a color sample of a target print to decide whether or not the color shade of the output is within a permissible range.

21. The pre-printing confirmation apparatus of a picture color tone for a printing press as set forth in claim 20, wherein said decision section performs the decision of the color shade for each ink supplying region of the printing press.

22. The pre-printing confirmation apparatus of a picture color tone for a printing press as set forth in claim 20 or 21, wherein the device profile of the printing press is produced based on a corresponding relationship obtained by printing a color scale of the Japan Color (ISO12642) or the like in advance with the reference density by the printing press.

23. The pre-printing confirmation apparatus of a picture color tone for a printing press as set forth in any one of claims 20 to 22, wherein said first conversion section, second conversion section and decision section are provided as functional elements of a controlling apparatus of said simulation printing tool.

24. A picture color tone controlling apparatus for a printing press for controlling a picture color tone of a printing press to which the pre-printing confirmation method of a picture color tone for a printing press as set forth in any one of claims 1 to 8 is applied, comprising:

an ink supplying apparatus for supplying ink to each of regions divided in a printing widthwise direction;

a noticed pixel region selection section for selecting a noticed pixel region to be noticed as an object of color tone control in a printing picture;

a target color mixture halftone density setting section for setting a target color mixture halftone density regarding the noticed pixel region selected by said noticed pixel region selection section;

an IRGB densitometer disposed on a traveling line of a pressrun sheet obtained by printing;

a color mixture halftone density measurement section for operating said IRGB densitometer to measure an actual color mixture halftone density for each noticed pixel region of the pressrun sheet;

a target tone value calculation section for calculating a target tone value for each ink color corresponding to the target color mixture halftone density based on a corresponding relationship between tone values and color mixture halftone densities set in advance;

an actual tone value calculation section for calculating an actual tone value for each ink color corresponding to the actual color mixture halftone density based on the corresponding relationship between tone values and color mixture halftone densities;

a target monochromatic halftone density calculation section for calculating a target monochromatic halftone density corresponding to the target tone value based on a corresponding relationship between tone values and monochromatic halftone densities set in advance;

an actual monochromatic halftone density calculation section for calculating an actual monochromatichalftone density corresponding to the actual tone value based on the corresponding relationship between tone values and monochromatic halftone densities;

a solid density difference calculation section for calculating a solid density difference corresponding to a difference between the target monochromatic halftone density and the actual monochromatic halftone density under the target tone value based on a corresponding relationship among tone values, monochromatic halftone densities and solid densities set in advance; and

an ink supplying amount adjustment section for adjusting an ink supplying amount for each ink supplying width based on the solid density difference.

**Amended claims under Art. 19.1 PCT**

**1.** (After amendment) A pre-printing color tone confirmation method for a printing press, comprising:

a device profile acquisition step of a printing press of producing or acquiring a relationship between plate making data and color coordinates under a reference density as a device profile of a printing press to be used for printing;
a device profile acquisition step of a monitor or printer of producing or acquiring a relationship between monitor output values or printer output values and color coordinates as a device profile of a monitor or printer;
a plate making data acquisition step (B10) of acquiring plate making data to be used for printing;
a first conversion step (B20) of converting plate making data of the acquired plate making data into color coordinates using the device profile of the printing press;
a second conversion step (B30) of converting the color coordinates into monitor output values or printer output values using the device profile of the simulation printing so that color coordinates same as the color coordinates obtained by the first conversion step are obtained;
an output step (B40) of outputting a picture according to the plate making data to the monitor or printer in accordance with the monitor output values or the printer output values obtained by the second conversion step, and
a decision step (B50) of deciding whether or not a color shade of an output of the monitor or printer is within a permissible range.

**2.** (After amendment) The pre-printing color tone confirmation method for a printing press as set forth in claim 1, wherein, at the decision step (B50), the decision of the color shade is performed for each ink supplying region of the printing press.

**3.** (After amendment) The pre-printing color tone confirmation method for a printing press as set forth in claim 1 or 2, wherein the device profile of the printing press is produced based on a corresponding relationship obtained by printing a color scale of the Japan Color (ISO12642) or the like in advance with the reference densi ty by the printing press.

**4.** (After amendment) The pre-printing color tone confirmation method for a printing press as set forth in any one of claims 1 to 3, wherein, if it is decided by the confirmation of the color shade at the decision step (B50) that the color shade is within a first permissible range, then plate making is performed using a reference plate making curve, but, if it is decided by the confirmation of the color shade at the decision step (B50) that the color shade is not within the first permissible range, then the plate making curve is corrected using the device profile of the printing press so that the plate making curve becomes the plate making curve of the printing press and then the plate making data is corrected using the corrected plate making curve of the printing press, whereafter the first conversion step, second conversion step and decision step are performed again.

**5.** (After amendment) The pre-printing color tone confirmation method for a printing press as set forth in claim 4, wherein the printing press performs, based on a detection value of a density detection sensor (1) which detects a density, color tone control such that a target density which is a target value for a density of a printed picture and an actual color development density of a printed picture approaches the target density, and acquires a relationship between densities and color coordinates as a device profile of the density detection sensor (1) in advance; if it is decided based on the confirmation of the color shade at the decision step (B50) that the color shade is within a second permissible range set as a range severer than the first permissible range within the first permissible range, then reference target densities corresponding to the plate making data are used as they are as the target density, but if it is decided that the color shade is not within the second permissible range, the target density is corrected so that the color shade falls within the second permissible range with respect to the reference target density; and the target densities obtained by the correction are converted into color coordinates using the device profile of the density detection sensor (1) and then the second conversion step and the decision step are performed again.

**6.** (After amendment) The pro-printing color tone confirmation method for a printing press as set forth in any one of claims 1 to 3, wherein the printing press performs, based on a detection value of a density detection sensor (1) which detects a density, color tone control such that a target density which is a target value for a density of a printed picture and an actual color development density of a printed picture approaches the target density, and acquires a relationship between densities and color coordinates as a device profile of the density detection sensor (1) in advance; if it is decided based on the confirmation of the color shade at the decision step (B50) that the color shade is within a permissible range, then reference target densities corresponding to the plate making data are used as they are as the target density, but if it is decided that the color shade is not within the permissible range, then the target density is corrected so that the color shade falls within the permissible range with respect to the reference target density; and

the target densities obtained by the correction are converted into color coordinates using the device profile of the density detection sensor (1) and then the second conversion step (B30) and the decision step (B50) are performed again.

**7.** (After amendment) The pre-printing color tone confirmation method for a printing press as set forth in claim 5 or 6, wherein the correction process of the target density includes:

a changing ratio setting step (S06) of setting a changing ratio regarding the target tone value of each ink color or the target density corresponding to the target tone value; and

a target value changing step (S08) of multiplying the reference target density or the target tone value corresponding to the reference target density by each changing ratio calculated at the changing ratio setting step to change the reference target density or the target tone value.

**8.** (After amendment) The pre-printing color tone confirmation method for a printing press as set forth in any one of claims 1 to 7, wherein the device profile acquisition step of the printing press, device profile acquisition step of the monitor or printer, plate making data acquisition step (B10), first conversion step (B20), second conversion step (B30) and output step (B40) are executed by a controlling apparatus of the monitor or printer.

**9.** (After amendment) A plate making method, wherein, if it is decided based on the confirmation of the color shade using the pre-printing color tone confirmation method for a printing press as set forth in claim 4 that the color shade is within the first permissible range, then plate making is performed using the reference plate making curve, but if it is decided that the color shade is not within the first permissible range, then the plate making curve is corrected so that the plate making curve becomes the plate making curve of the printing press using the device profile of the printing press and then plate making is performed using the corrected plate making curve of the printing press.

**10.** (Deleted)

**11.** (Deleted)

**12.** (Deleted)

**13.** (Deleted)

**14.** (Deleted)

**15.** (Deleted)

**16.** (Deleted)

**17.** (Deleted)

**18.** (Deleted)

**19.** (Deleted)

**20.** (After amendment) A pre-printing color tone confirmation apparatus for a printing press, comprising:

a first conversion section for converting plate making data of plate making data into color coordinates using a device profile of a printing press to be used for printing;

a monitor or printer;

a second conversion section for converting the color coordinates obtained by the first conversion section into monitor output values (monitor) or printer output values (printer) using a device profile of said monitor or printer;

an output section for outputting the monitor output values or the printer output values converted by the second conversion section to said monitor or said printer; and

a decision section for comparing a color shade of an output obtained by outputting a picture according to the plate making data to said monitor or printer in accordance with the monitor output values (monitor) or printer output values (printer) obtained by the conversion with a color shade of a color sample of a target print to decide whether or not the color shade of the output is within a permissible range.

**21.** (After amendment) The pre-printing color tone confirmation apparatus for a printing press as set forth in claim 20, wherein said decision section performs the decision of the color shade for each ink supplying region of the printing press.

**22.** (After amendment) The pre-printing color tone confirmation apparatus for a printing press as set forth in claim 20 or 21, wherein the device profile of the printing press is produced based on a corresponding relationship obtained by printing a color scale of the Japan Color (ISO12642) or the like in advance with the reference density by the printing press.

**23.** (After amendment) The pre-printing color tone confirmation apparatus for a printing press as set forth in any one of claims 20 to 22, further comprising:

a color tone controlling apparatus for setting a target density which is a target value for a density of a printed picture and controlling a color tone of the printed picture based on a detection value of the printed picture by a density detection sensor so that an actual color development density of the printed picture approaches the target density; and
a device profile of said density detection sensor representative of a relationship between densities and color coordinates; and wherein,

if it is decided as a result of the decision by said decision section that the color shade is within the permissible range, then the target density is corrected so that the color shade comes within the permissible range and said device profile of said density detection sensor is used to convert the corrected target density into color coordinates, whereafter said second conversion section and said decision sector are controlled so as to carry out again.

**24.** (After amendment) The pre-printing color tone confirmation apparatus for a printing press as set forth in any one of claims 20 to 23, wherein said first conversion section, second conversion section and decision section are provided as the functional elements of said monitor or printer.

**Statement under Art. 19.1 PCT**

Claims 1-8 after amendment involve changes of the title of the invention from "pre-printing confirmation method of a picture color tone for a printing press" to "pre-printing color tone confirmation method for a printing press".
Claims 10-19 are deleted by amendment.
Claims 20-24 after amendment involve changes of the title of the invention from "pre-printing confirmation apparatus of a picture color tone for a printing press" to "pre-printing color tone confirmation apparatus for a printing press".
Further, claims 1, 5, 6, 7, 8, 9, 20, 23, 24 after amendment are changed in the following manner.
In particular, claim 1 after amendment involves changes of claim 1 before amendment of "reference ink density" to "reference density", of "tone value data k, c, m and y" to "plate making data", of "simulation printing tool" to "monitor or printer", of "simulation printing tool color mixture halftone densities R, G and B" to "monitor output values", and of "simulation printing tool tone values k', c', m' and y'" to "printer output values", deletion of " (L'a'b')" from claim 1, and amendment to claim 1 for clarifying the relationship between the first conversion step and the second conversion step and the relationship between the second conversion step and the output step.
Claim 5 after amendment involves changes of claim 5 before amendment of "color mixture halftone density" and "color mixture halftone densities" into "density" and "densities", respectively, and of "picture color tone control" to "color tone control", deletion of "(L*a*b*)" "I, R, G and B", "$I_0$, $R_0$, Go and $B_0$" and "$I_0$', $R_0$', Go' and $B_0$' ", from claim 5, and addition of amendment for clarifying the description to claim 5.
Claim 6 after amendment involves changes of claim 6 before amendment of "color mixture halftone density" and "color mixture halftone densities" into "density" and "densities", respectively, of "picture color tone control" to "color tone control" and of "monochromatic halftone density" to "monochromatic density", deletion of "(L*a*b*)", "I, R, G and B", "$I_0$, $R_0$, $G_0$ and $B_0$" and "$I_0$', $R_0$', Go' and $B_0$'" from claim 6, and addition of amendment for clarifying the description to claim 6.
Claim 7 after amendment involves changes of claim 7 before amendment of "color mixture halftone density" to "density".
Claim 8 after amendment involves changes of claim 8 before amendment of "simulation printing tool" to "monitor or printer".

Claim 9 after amendment involves changes of claim 9 before amendment of "pre-printing confirmation method of a picture color tone for a printing press" to "pre-printing color tone confirmation method for a printing press".

Claim 20 after amendment involves changes of claim 20 before amendment of "tone value data k, c, m and y" to "plate making data", of "simulation printing tool" to "monitor or printer (monitor)", of "simulation printing tool color mixture halftone densities R, G and B" to "monitor output values", and of "simulation printing tool tone values k', c', m' and y'" to "printer output values (printer)", deletion of "(L'a'b')" from claim 20, and amendment to claim 20 for clarifying the relationship between the first conversion step and the second conversion step and the relationship between the second conversion step and the output step.

Claim 23 after amendment involves a newly added claim.

Claim 24 after amendment involves changes of claim 23 before amendment of "simulation printing tool" to "monitor or printer" and change of the dependency.

# FIG. 1

```
                              ( START )
      (a) ─────────────────────────┐
                                    ▼
              ┌─────────────────────────────────────┐
              │  PLATE MAKING DATA ACQUISITION       │──B10
              └─────────────────────────────────────┘
                            │ k, c, m, y
                            ▼
          ┌───────────────────────────────────────────────┐
          │  ACQUIRE COLOR COORDINATE VALUES (L, a, b)     │
          │  CORRESPONDING TO TONE VALUES (k, c, m, y)     │──B20
          │  USING DEVICE PROFILE OF REFERENCE ROTARY PRESS│
          └───────────────────────────────────────────────┘
      (b) ─────────────────────────┐ L, a, b
                                    ▼
          ┌───────────────────────────────────────────────┐
          │  CONVERT COLOR COORDINATE VALUES (L, a, b)     │
          │      INTO DATA (R, G, B OR k, c, m, y)         │
          │  OF MONITOR OR PRINTER WITH WHICH (L, a, b)    │──B30
          │  OF REFERENCE ROTARY PRESS AND MONITOR         │
          │  OR PRINTER COINCIDE WITH EACH OTHER           │
          │  USING DEVICE PROFILE OF MONITOR OR PRINTER    │
          └───────────────────────────────────────────────┘
                            │ R, G, B
                            ▼
              ┌─────────────────────────────────────┐
              │  OUTPUTTING OF MONITOR OR PRINTER    │──B40
              └─────────────────────────────────────┘
```

NO
COLOR SHADE IS MUCH DIFFERENT ◄── COLOR SHADE OK? ──► YES

B50

NO
COLOR SHADE IS SLIGHTLY DIFFERENT

```
┌─────────────────────────┐
│  TRANSMIT DEVICE PROFILE │
│  OF REFERENCE ROTARY PRESS│──B100
│  AND PRINTER OUTPUT      │
│  TO CLIENT               │
└─────────────────────────┘

         B80 ──┐   ┌─────────────────┐
               └──►│ CHANGE TARGET   │
                   │ DENSITY         │
                   └─────────────────┘

┌─────────────────────────┐        │ R, G, B, I
│  CHANGE PLATE MAKING     │        ▼
│  CURVE BASED ON DEVICE   │──B110
│  PROFILE OF REFERENCE    │
│  ROTARY PRESS            │
└─────────────────────────┘

              (a)

┌──────────────────┐
│ PLATE MAKING     │──B60
└──────────────────┘
        │
        ▼
┌──────────────────┐
│ PRINTING         │──B70
└──────────────────┘
        │
        ▼
     ( END )
```

```
      ┌───────────────────────────────────────────────┐
      │  ACQUIRE COLOR COORDINATE VALUES               │
      │  (L, a, b) CORRESPONDING TO COLOR              │──B90
      │  MIXTURE HALFTONE DENSITY (R, G, B, I)         │
      │  USING SENSOR DEVICE PROFILE                   │
      └───────────────────────────────────────────────┘
                            │
                            ▼
                          (b)
```

FIG. 2

```
        ┌─────────────┐
        │    START    │
        └─────────────┘
               │
               ▼
   ┌───────────────────────────┐
   │   PRINT COLOR CHART       │─── A10
   └───────────────────────────┘
               │
               ▼
   ┌───────────────────────────┐
   │ PRODUCTION OF DEVICE PROFILE │
   │  OF REFERENCE ROTARY PRESS │─── A20
   │    c, m, y, k - L, a, b    │
   └───────────────────────────┘
               │
               ▼
   ┌───────────────────────────┐
   │    SENSOR DEVICE PROFILE   │
   │ PRODUCTION R, G, B, I - L, a, b │─── A30
   └───────────────────────────┘
               │
               ▼
        ┌─────────────┐
        │     END     │
        └─────────────┘
```

FIG. 3

```
┌──────────────┐   GALLEY,          ┌──────────────┐
│   CLIENT     │  PLATE MAKING DATA │  NEWSPAPER   │
│ (ADVERTISING │ ─────────────────▶ │   COMPANY    │
│ AGENCY, ETC) │                    │ (HEAD OFFICE)│
└──────────────┘                    └──────────────┘
    PLATE MAKING                   ╱      │      ╲
    DATA DENSITY                  ╱       │       ╲
    TARGET VALUE                 ╱        │        ╲
                                ▼         ▼         ▼
                          ┌─────────┐┌─────────┐┌─────────┐
                          │ PRINTING││ PRINTING││ PRINTING│
                          │FACTORY A││FACTORY B││FACTORY C│
                          └─────────┘└─────────┘└─────────┘
```

# FIG. 4A

<u>HEAD OFFICE</u>

COLOR MIXTURE HALFTONE DENSITY
R, G, B CORRESPONDING TO PLATE
MAKING DATA k, c, m, y

| MONITOR | → | DATA OUTPUT |

COMPARE WITH GALLEY

# FIG. 4B

<u>CLIENT</u>

| OUTPUT TRANSMITTED DISPLAY INFORMATION TO MONITOR | → | CHANGE PLATE MAKING CURVE |

COMPARE WITH GALLEY

FIG. 5

EP 1 983 738 A1

# FIG. 6

EP 1 983 738 A1

# FIG. 7

# FIG. 8

COLOR MIXTURE HALFTONE DENSITY

TONE VALUE

# FIG. 9

COLOR SPACE

EXTENDED NEUGEBAUER

● :PRESENT DENSITY

# FIG. 10

# FIG. 11

# FIG. 12

BITMAP DATA
(k, c, m, y)

S321

RESOLUTION
CONVERSION

DATA CORRESPONDING
TO CIP3

ICC PROFILE

S322

NOTICED PIXEL
REGION SELECTION → ①

ki, ci, mi, yi

ki, ci, mi, yi

S325

141

S323

CONVERSION INTO
COLOR COORDINATE
VALUES

CONVERSION INTO
COLOR COORDINATE
VALUES

141

S324

L, a, b

L, a, b

L', a', b'

COLOR MIXTURE
HALFTONE DENSITY
CANDIDATE
CALCULATION

COLOR DIFFERENCE
CALCULATION

S326

$\Delta L'$, $\Delta a'$, $\Delta b'$

kcmy CHANGING
AMOUNT CALCULATION

S327

S328

$\Delta k'$, $\Delta c'$, $\Delta m'$, $\Delta y'$

VIRTUAL TONE VALUE
CALCULATION

ki, ci, mi, yi

141

S329

k', c', m', y'

SELECTION OF COLOR
MIXTURE HALFTONE
DENSITY

Io, Ro, Go, Bo

TO STEP S40

FROM STEP S20

① NOTICED
PIXEL
REGION

i, r, g, b

S330

CALCULATION OF ACTUAL
COLOR MIXTURE HALFTONE
DENSITY OF NOTICED PIXEL
REGION

I, R, G, B

TO STEP S40

## FIG. 13

<table>
<tr><td colspan="2" align="center">**INTERNATIONAL SEARCH REPORT**</td><td>International application No.<br>PCT/JP2007/051593</td></tr>
</table>

A.  CLASSIFICATION OF SUBJECT MATTER
*H04N1/46*(2006.01)i, *B41C1/00*(2006.01)i, *B41F31/02*(2006.01)i, *G01J3/46*
(2006.01)i, *H04N1/60*(2006.01)i

According to International Patent Classification (IPC) or to both national classification and IPC

B.  FIELDS SEARCHED

Minimum documentation searched (classification system followed by classification symbols)
H04N1/46, B41C1/00, B41F31/02, G01J3/46, H04N1/60

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 2000-278547 A  (Fuji Photo Film Co., Ltd.),<br>06 October, 2000 (06.10.00),<br>Par. Nos. [0066] to [0072]; Fig. 6 | 1,20<br>2-19,21-24 |
| X<br>Y | JP 2003-125222 A  (Canon Inc.),<br>25 April, 2003 (25.04.03),<br>Par. Nos. [0011] to [0030]; Figs. 1, 2 | 1,20<br>2-19,21-24 |
| X<br>Y | JP 2003-125224 A  (Canon Inc.),<br>25 April, 2003 (25.04.03),<br>Par. Nos. [0019] to [0031]; Figs. 2, 3 | 1,20<br>2-19,21-24 |
| Y<br>A | JP 2004-106523 A  (Mitsubishi Heavy Industries,<br>Ltd.),<br>08 April, 2004 (08.04.04),<br>Claims 1 to 10; Par. Nos. [0009], [0026] to<br>[0050]; Figs. 1 to 7 | 2-19,21-24<br>1,20 |

| ☒ | Further documents are listed in the continuation of Box C. | ☒ | See patent family annex. |
|---|---|---|---|

| | |
|---|---|
| *  Special categories of cited documents: | "T"  later document published after the international filing date or priority |
| "A"  document defining the general state of the art which is not considered    to be of particular relevance | date and not in conflict with the application but cited to understand the principle or theory underlying the invention |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search<br>    22 February, 2007 (22.02.07) | Date of mailing of the international search report<br>    06 March, 2007 (06.03.07) |
|---|---|
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2007/051593 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y<br>A | JP 2005-508125 A  (E.I. Du Pont De Nemours &<br>Co.),<br>24 March, 2005 (24.03.05),<br>Par. Nos. [0015] to [0023] | 11<br>1-10,12-24 |
| Y<br>A | JP 2001-277473 A  (Mitsubishi Heavy Industries,<br>Ltd.),<br>09 October, 2001 (09.10.01),<br>Par. No. [0028] | 14<br>1-13,15-24 |
| A | JP 2003-78774 A  (Konica Corp.),<br>14 March, 2003 (14.03.03),<br>Full text | 1-24 |

Form PCT/ISA/210 (continuation of second sheet) (April 2005)

## INTERNATIONAL SEARCH REPORT
Information on patent family members

International application No.

PCT/JP2007/051593

| | | | |
|---|---|---|---|
| JP 2000-278547 A | 2000.10.06 | EP 1071275 A1<br>US 6324975 B1<br>WO 00/042764 A1 | 2001.01.24<br>2001.12.04<br>2000.07.20 |
| JP 2003-125222 A | 2003.04.25 | (Family: none) | |
| JP 2003-125224 A | 2003.04.25 | (Family: none) | |
| JP 2004-106523 A | 2004.04.08 | US 2006-92473 A1 | 2006.05.04 |
| JP 2005-508125 A | 2005.03.24 | EP 1440565 A<br>US 2003-98896 A1<br>WO 03/039134 A1 | 2004.07.28<br>2003.05.29<br>2003.05.08 |
| JP 2001-277473 A | 2001.10.09 | (Family: none) | |
| JP 2003-78774 A | 2003.03.14 | (Family: none) | |

Form PCT/ISA/210 (patent family annex) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001018364 A
- JP 2001047605 A
- JP 2004106523 A